(19) Europäisches Patentamt
European Patent Office
Office européen des brevets

(11) **EP 4 592 844 A1**

(12) **EUROPEAN PATENT APPLICATION**

(43) Date of publication:
**30.07.2025  Bulletin 2025/31**

(21) Application number: **25153849.2**

(22) Date of filing: **24.01.2025**

(51) International Patent Classification (IPC):
*G06F 9/50* (2006.01)

(52) Cooperative Patent Classification (CPC):
**G06F 9/5038; G06F 9/505; G06N 3/098;
G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.01.2024  GR 20240100049
25.01.2024  GR 20240100053
30.01.2024  US 202418427046
30.01.2024  US 202418427269
18.12.2024  GR 20240100894
10.01.2025  US 202519016091**

(71) Applicant: **Mellanox Technologies, Ltd.
2069200 Yokneam (IL)**

(72) Inventors:
• **PATRONAS, Ioannis (Giannis)
2069200 Yokneam (IL)**
• **WERTHEIMER, Zsolt-Alon
2069200 Yokneam (IL)**
• **TERZENIDIS, Nikolaos
2069200 Yokneam (IL)**
• **SYRIVELIS, Dimitrios
2069200 Yokneam (IL)**
• **ZAHAVI, Eitan
2069200 Yokneam (IL)**
• **BAKOPOULOS, Paraskevas
2069200 Yokneam (IL)**
• **MENTOVICH, Elad
2069200 Yokneam (IL)**

(74) Representative: **Mathys & Squire
The Shard
32 London Bridge Street
London SE1 9SG (GB)**

(54) **SYSTEM FOR ALLOCATION OF NETWORK RESOURCES FOR OPTIMIZED DATA COMMUNICATION IN HIERARCHICAL NETWORKS**

(57) Systems, computer program products, and methods are described herein for allocation of network resources to execute AI workloads. An example system receives a data distribution task along with execution parameters, including a plurality of data portions and hosts. The system determines a plurality of points of delivery (PODs), each comprising switches with a defined radix (k), and couples the PODs to the hosts to configure a network structure optimized for AI workload execution. The system identifies at least one destination host for each source host based on the radix (k) and executes the data distribution task by transmitting data portions from each source host to the identified destination hosts through a corresponding subset of the PODs.

FIG. 1

EP 4 592 844 A1

**Description**

CROSS-REFERENCE TO RELATED APPLICATIONS

This application claims priority to Greek Patent Application No. 20240100894, filed on December 18, 2024, which is (i) a Continuation-in-Part of U.S. Application No. 18/427,046, filed on January 30, 2024, which claims priority to Greek Patent Application No. 20240100049, filed on January 25, 2024, and (ii) a Continuation-in-Part of U.S. Application No. 18/427,269, filed on January 30, 2024, which claims priority to Greek Patent Application No. 20240100053, filed on January 25, 2024. The content of the aforementioned applications is hereby incorporated by reference in their entirety as though fully set forth herein.

TECHNOLOGICAL FIELD

Example embodiments of the disclosure relate to network communications and, more particularly, to resource allocation and optimized data communication.

BACKGROUND

In network architectures, efficient and scalable data exchange is increasingly important, particularly for high-performance computing applications such as artificial intelligence (AI) and machine learning (ML). These workloads often require significant computational resources and involve distributed systems that rely on optimized communication. Traditional hierarchical network designs may encounter limitations in managing congestion, allocating resources, and ensuring effective communication paths, particularly under high concurrency or when executing complex data transmission patterns.

Applicant has identified a number of deficiencies and problems associated with conventional network systems and associated communications. Many of these identified problems have been solved by developing solutions that are included in embodiments of the disclosure, many examples of which are described in detail herein.

SUMMARY

The invention is defined by the claims. In order to illustrate the invention, aspects and embodiments which may or may not fall within the scope of the claims are described herein.

Systems, computer program products, and methods are described herein for allocation of network resources to execute AI workloads. An example system receives a data distribution task along with execution parameters, including a plurality of data portions and hosts. The system determines a plurality of points of delivery (PODs), each comprising switches with a defined radix (k), and couples the PODs to the hosts to configure a network structure optimized for AI workload execution. The system identifies at least one destination host for each source host based on the radix (k) and executes the data distribution task by transmitting data portions from each source host to the identified destination hosts through a corresponding subset of the PODs.

Any feature of one aspect or embodiment may be applied to other aspects or embodiments, in any appropriate combination. In particular, any feature of a method aspect or embodiment may be applied to an apparatus aspect or embodiment, and vice versa.

GENERAL DESCRIPTION

Systems, methods, and computer program products are therefore provided for optimizing data communication and resource allocation in network environments to support high-performance computing applications. These embodiments may enable dynamic network reconfiguration, efficient execution of communication patterns such as all-to-all communication, and scalability across diverse network topologies, including hierarchical and mesh configurations, while accommodating advanced interconnect technologies.

In one aspect, a method for allocation of network resources is presented. The method comprising: receiving, from a user input device, a data distribution task and parameters associated with the data distribution task, wherein the data distribution task is associated with an artificial intelligence (AI) workload, wherein the parameters comprise a plurality of data portions and a plurality of hosts; determining a plurality of points of delivery (PODs) based on the plurality of hosts, wherein the plurality of PODs comprises a plurality of switches, wherein each switch is associated with a radix (k); operatively coupling the plurality of PODs to the plurality of hosts to configure a network structure optimized for executing the AI workload; identifying, from the plurality of hosts, at least one destination host for each source host based on at least the radix (k); and executing the data distribution task by transmitting respective portions of the plurality of data portions to from each source host to the at least one identified destination host via a corresponding subset of the plurality of PODs, wherein the transmission facilitates processing of the AI workload across the plurality of hosts.

In some embodiments, executing the data distribution task comprises transmitting the plurality of data portions according to an all-to-all communication pattern.

In some embodiments, configuring the network structure comprises arranging the plurality of PODs and the plurality of hosts in a mesh topology to facilitate data transmission.

In some embodiments, executing the data distribution task comprises: determining a required number of data distribution stages for execution of the data distribution task based on at least an aggregate count of the plurality of hosts; and transmitting the plurality of data portions in a sequence of data distribution stages based on the required number of data distribution stages.

In some embodiments, for each data distribution stage (s), the method comprises: identifying a destination host (j) for each source host (i) based on at least a distribution of hosts (Hx) within each POD, and the radix (k) of each switch; and transmitting a first data portion from the source host (i) to the identified destination host (j) via the corresponding subset of the plurality of PODs using a bandwidth, B, of corresponding communication links.

In some embodiments, the destination host is identified based on: $j = (((i + s) \bmod H_x) * k) + \left\lfloor \frac{i}{H_x} \right\rfloor + \left\lfloor \frac{s}{H_x} \right\rfloor$.

In some embodiments, for each data distribution stage (s), a number of destination hosts for each source host (i) is determined based on a window size, W, and wherein the number of destination hosts for each source host (i) is equal to the window size, W.

In some embodiments, wherein for window size, W>1, executing the data distribution task comprises executing the data distribution task in a clustered grouping of data distribution stages, wherein a size of the clustered grouping is based on at least the window size, W.

In some embodiments, executing the data distribution task in the sequence of data distribution stages further comprises: iteratively determining the destination host (j) for each source host (i) at each data distribution stage (s) for the required number of data distribution stages; and at each iteration, transmitting data portions from the plurality of data portions from the source host (i) to the determined destination host (j).

In some embodiments, the method comprises: determining that an allocation of the subset of the plurality of hosts under each POD is asymmetric; integrating a plurality of virtual hosts in the network structure to balance the asymmetric distribution of the subset of the plurality of hosts under each POD to create a symmetric distribution; and executing the data distribution task by transmitting respective portions of the plurality of data portions from each source host to the at least one identified destination host via the corresponding subset of PODs, wherein the at least one identified destination host comprises at least one of the plurality of hosts and the plurality of virtual hosts.

In another aspect, a system for allocation of network resources is presented. The system comprising: a processing device; and a non-transitory storage device containing instructions that, when executed by the processing device, cause the processing device to: receive, from a user input device, a data distribution task and parameters associated with the data distribution task, wherein the data distribution task is associated with an artificial intelligence (AI) workload, wherein the parameters comprise a plurality of data portions and a plurality of hosts; determine a plurality of points of delivery (PODs) based on the plurality of hosts, wherein the plurality of PODs comprises a plurality of switches, wherein each switch is associated with a radix (k); operatively couple the plurality of PODs to the plurality of hosts to configure a network structure optimized for executing the AI workload; identify, from the plurality of hosts, at least one destination host for each source host based on at least the radix (k); and execute the data distribution task by transmitting respective portions of the plurality of data portions to from each source host to the at least one identified destination host via a corresponding subset of the plurality of PODs, wherein the transmission facilitates processing of the AI workload across the plurality of hosts.

In yet another aspect, a computer program product for allocation of network resources is presented. The computer program product comprising a non-transitory computer-readable medium comprising code configured to cause an apparatus to: receive, from a user input device, a data distribution task and parameters associated with the data distribution task, wherein the data distribution task is associated with an artificial intelligence (AI) workload, wherein the parameters comprise a plurality of data portions and a plurality of hosts; determine a plurality of points of delivery (PODs) based on the plurality of hosts, wherein the plurality of PODs comprises a plurality of switches, wherein each switch is associated with a radix (k); operatively couple the plurality of PODs to the plurality of hosts to configure a network structure optimized for executing the AI workload; identify, from the plurality of hosts, at least one destination host for each source host based on at least the radix (k); and execute the data distribution task by transmitting respective portions of the plurality of data portions to from each source host to the at least one identified destination host via a corresponding subset of the plurality of PODs, wherein the transmission facilitates processing of the AI workload across the plurality of hosts.

In still another aspect, a method for data communication in hierarchical networks is presented. The method comprising: receiving, from a user input device, a data distribution task and parameters associated with the data distribution task, wherein the data distribution task is associated with an artificial intelligence (AI) workload, wherein the parameters comprise a plurality of data portions and a plurality of hosts; determining a plurality of points of delivery (PODs) based on the plurality of hosts, wherein the plurality of PODs is associated with a plurality of switches, wherein each switch is associated with a radix (k); operatively coupling the plurality of switches to the plurality of hosts to configure a network structure optimized for executing the AI workload; identifying, from the plurality of hosts, at least one destination host for each source host based on at least a number of communication hops, wherein the number of communication hops is determined based on a corresponding subset of the plurality of switches associated with traversal of data from each source host to the at least one destination; and executing the data distribution task by transmitting respective portions of the plurality of data portions from each source host to the at least one identified destination host via the corresponding subset of the plurality of switches, wherein the transmission facilitates processing of the AI workload across the plurality of hosts.

In some embodiments, executing the data distribution task comprises transmitting the plurality of data portions according to an all-to-all communication pattern.

In some embodiments, configuring the network structure comprises arranging the plurality of PODs and the plurality of hosts in a mesh topology to facilitate data transmission.

In some embodiments, executing the data distribution task comprises: determining a required number of data distribution stages for execution of the data distribution task based on at least an aggregate count of the plurality of hosts; and transmitting the plurality of data portions in a sequence of data distribution stages based on the required number of data distribution stages.

In some embodiments, for each data distribution stage (s), the method comprises: identifying the at least one destination host (j) for each source host (i) such that the number of data communication hops required for traversal of data from each source host (i) to the at least one identified destination host (j) via the corresponding subset of the plurality of switches is equal; and transmitting a predetermined data portion from the source host (i) to the at least one identified destination host (j) via the corresponding subset of the plurality of switches.

In some embodiments, the at least one destination host is identified based on: $j =$

$$\left( i + s \bmod \frac{k}{2} \right) + \left( \left( \frac{k}{2} * \left\lfloor \frac{i}{\frac{k}{2}} \right\rfloor + \frac{k}{2} * \left\lfloor \frac{s}{\frac{k}{2}} \right\rfloor \right) \bmod \frac{k^2}{4} \right) + \left( \left( \frac{k^2}{4} * \left\lfloor \frac{i}{\frac{k^2}{4}} \right\rfloor + \frac{k^2}{4} * \left\lfloor \frac{s}{\frac{k^2}{4}} \right\rfloor \right) \bmod \frac{k^3}{4} \right)$$

In some embodiments, $\left( i + s \bmod \frac{k}{2} \right)$ defines a cyclic sequence of communication between the plurality of hosts under each switch.

In some embodiments, $\left( \left( \frac{k}{2} * \left\lfloor \frac{i}{\frac{k}{2}} \right\rfloor + \frac{k}{2} * \left\lfloor \frac{s}{\frac{k}{2}} \right\rfloor \right) \bmod \frac{k^2}{4} \right)$ identifies a destination switch within a destination POD associated with the at least one identified destination host (j) by determining a switch offset defining a relative position of the destination switch within the destination POD.

In some embodiments, $\left( \left( \frac{k^2}{4} * \left\lfloor \frac{i}{\frac{k^2}{4}} \right\rfloor + \frac{k^2}{4} * \left\lfloor \frac{s}{\frac{k^2}{4}} \right\rfloor \right) \bmod \frac{k^3}{4} \right)$ identifies a destination POD associated with the at least one identified destination host (j) by determining a POD offset defining a relative position of the at least one identified destination host (j) within the plurality of PODs.

In some embodiments, for each data distribution stage (s), a number of destination hosts for each source host (i) is determined based on a window size W, and wherein the number of destination hosts for each source host (i) is equal to the window size, W.

In some embodiments, for window size W>1, executing the data distribution task comprises executing the data distribution task in a clustered grouping of data distribution stages, wherein a size of the clustered grouping is based on at least the number of communication hops required for traversal of data from each source host to the at least one identified destination host via the corresponding subset of the plurality of switches.

In some embodiments, executing the data distribution task in the sequence of data distribution stages further comprises: iteratively determining the at least one identified destination host (j) for each source host (i) at each data distribution stage (s) for the required number of data distribution stages; and at each iteration, transmitting data portions from the plurality of data portions from the source host (i) to the at least one identified destination host (j).

In still another aspect, a system for data communication in hierarchical networks is presented. The system comprising: a processing device; and a non-transitory storage device containing instructions that, when executed by the processing device, cause the processing device to: receive, from a user input device, a data distribution task and parameters associated with the data distribution task, wherein the data distribution task is associated with an artificial intelligence (AI) workload, wherein the parameters comprise a plurality of data portions and a plurality of hosts; determine a plurality of points of delivery (PODs) based on the plurality of hosts, wherein the plurality of PODs is associated with a plurality of switches, wherein each switch is associated with a radix (k); operatively couple the plurality of switches to the plurality of hosts to configure a network structure optimized for executing the AI workload; identify, from the plurality of hosts, at least one destination host for each source host based on at least a number of communication hops, wherein the number of communication hops is determined based on a corresponding subset of the plurality of switches associated with traversal of data from each source host to the at least one destination; and execute the data distribution task by transmitting respective portions of the plurality of data portions from each source host to the at least one identified destination host via the corresponding subset of the plurality of switches, wherein the transmission facilitates processing of the AI workload across the plurality of hosts.

In still another aspect, a computer program product for data communication is presented. The computer program product comprising a non-transitory computer-readable medium comprising code configured to cause an apparatus to: receive, from a user input device, a data distribution task and parameters associated with the data distribution task, wherein the data distribution task is associated with an artificial intelligence (AI) workload, wherein the parameters comprise a plurality of data portions and a plurality of hosts; determine a plurality of points of delivery (PODs) based on the plurality of hosts, wherein the plurality of PODs is associated with a plurality of switches, wherein each switch is associated with a radix (k); operatively couple the plurality of switches to the plurality of hosts to configure a network structure optimized for executing the AI workload; identify, from the plurality of hosts, at least one destination host for each source host based on at least a number of communication hops, wherein the number of communication hops is determined based on a corresponding subset of the plurality of switches associated with traversal of data from each source host to the at least one destination; and execute the data distribution task by transmitting respective portions of the plurality of data portions from each source host to the at least one identified destination host via the corresponding subset of the plurality of switches, wherein the transmission facilitates processing of the AI workload across the plurality of hosts.

BRIEF DESCRIPTION OF THE DRAWINGS

Having described certain example embodiments of the disclosure in general terms above, reference will now be made to the accompanying drawings. The components illustrated in the figures may or may not be present in certain embodiments described herein. Some embodiments may include fewer (or more) components than those shown in the figures.

FIG. 1 illustrates a schematic diagram of an example datacenter network architecture, in accordance with an embodiment of the disclosure;

FIG. 2 illustrates a schematic diagram of an example server system architecture 200, some or all of which may be included in the server system of FIG. 1, in accordance with an embodiment of the disclosure;

FIGS. 3A-3B illustrates an example configuration of an HPC cluster within server system, in accordance with an embodiment of the disclosure;

FIG. 4 illustrates an example network environment for efficient allocation of network resources for optimized data communication, in accordance with an embodiment of the disclosure;

FIGS. 5A and 5B illustrate example configurations of PODs as illustrated in FIG. 4, in accordance with an embodiment of the disclosure;

FIG. 6 illustrates an example network environment for optimized data communication, in accordance with an embodiment of the disclosure;

FIG. 7 illustrates a schematic block diagram of example circuitry, some or all of which may be included in the system, in accordance with an embodiment of the disclosure;

FIGS. 8A and 8B illustrate an example inference and/or training logic 800 used to perform inferencing and/or training operations associated with AI workloads, in accordance with an embodiment of the disclosure;

FIG. 9 illustrates an exemplary generative AI architecture 900, in accordance with an embodiment of the invention;

FIG. 10 illustrates an example method for efficient allocation of network resources for optimized data communication, in accordance with an embodiment of the disclosure;

FIG. 11 illustrates an equation outcome table for optimized data communication in a POD, in accordance with an embodiment of the disclosure;

FIG. 12 illustrates an example method for optimized data communication, in accordance with an embodiment of the disclosure; and

FIG. 13 illustrates an example equation outcome table for optimized data communication associated with POD, in accordance with an embodiment of the disclosure.

DETAILED DESCRIPTION

Overview

In network architectures, efficient and scalable data exchange is increasingly important, particularly for high-performance computing applications such as AI and machine learning ML. These workloads often require significant computational resources and involve distributed systems that rely on optimized communication. Traditional hierarchical network designs may encounter limitations in managing congestion, allocating resources, and ensuring effective communication paths, particularly under high concurrency or when executing complex data transmission patterns.

In a hierarchical network, hosts (or servers) connect to the network through ports coupled to switches, such as leaf switches, which form the first layer of distribution. These switches may connect to a secondary layer of spine switches for aggregation and distribution and may further interface with optical switches to facilitate inter-host communication. Connections between switches and optical switches can be direct or bundled to enhance capacity. Optical switches may enable faster data transfer, lower latency, and dynamic network reconfiguration. Such a layered structure may provide scalability, optimize resource use, and adapt to varying traffic demands.

Hosts may connect to points of delivery (PODs), which consist of a combination of switches and other network components. PODs may be fully connected through spine switches and uniformly linked to other PODs for inter-POD communication. Each link may have specific bandwidth, and the network can be configured to ensure direct or bundled optical paths between PODs for efficient communication. Network configurations may adapt to different ratios of host links to optical switches or varying connectivity requirements. To execute all-to-all communication, hosts may exchange data systematically over multiple stages. At each stage, a source host communicates with a destination host, governed by a window size (W) and available link bandwidth (B). Adjustments to the process may optimize resource utilization and address data load variability. A traditional communication equation, $j=(i+s) \bmod N$, governs the stages, where $i$ is the source host, $j$ is the destination host, s is the stage, and $N$ is the total number of hosts.

As stages progress, the pattern may introduce congestion due to simultaneous data transfers, which can divide link bandwidth and reduce communication speed. The parent application, U.S. Patent Application No. 18/427,046 (hereinafter "'046 application"), proposes various embodiments for optimizing data flow in networks executing all-to-all communication patterns by replace traditional equations with a modified formula that accounts for the distribution of hosts within points of delivery (PODs) and the configuration of network components, such as leaf and spine switches. The described formula dynamically adjusts for POD configurations, ensuring efficient bandwidth utilization by clustering stages when multiple simultaneous transmissions are required. For asymmetrically distributed hosts, virtual or dummy hosts may be introduced to balance the network, ensuring consistent data flow without compromising link bandwidth.

As stages progress, communication extends to hosts farther apart, increasing the number of hops required for inter-switch and inter-POD communication. This may result in uneven communication paths and greater complexity in the network hierarchy. The parent application, U.S. Patent Application No. 18/427,269 (hereinafter "'269 application"), proposes various embodiments to optimize data transmission for all-to-all communication patterns by ensuring an equal number of communication hops between source and destination hosts at each stage. The proposed formula governs communication, dividing the process into three components: a cyclic sequence for host communication, a calculation for the destination switch within a POD, and a determination of the destination POD. Such a structured approach balances load and ensures efficient communication systems and methods for optimizing data communication and resource allocation within hierarchical networks. For cases requiring simultaneous data transfer to multiple destinations, stages may be clustered based on communication hops, allowing resource-efficient grouping. To address asymmetry in host distribution across PODs, virtual or dummy hosts may be introduced to balance the network structure. These adjustments ensure consistent and efficient communication while accommodating network variability.

Embodiments of the disclosure expand the scope of the parent applications ('046 application and '269 application) by applying these concepts to environments supporting high-performance computing workloads such as AI and ML. These workloads may require all-to-all communication patterns, where multiple processing units exchange data across stages. Efficient execution of such patterns may involve addressing congestion and ensuring consistent latency across communication paths. Advanced interconnect technologies, such as NVLink, may be used to facilitate high-bandwidth, low-latency communication between nodes, while network topologies such as mesh configurations may be employed to provide scalable and distributed connectivity.

Embodiments of the disclosure will now be described more fully hereinafter with reference to the accompanying drawings, in which some, but not all, embodiments of the disclosure are shown. Indeed, the disclosure may be embodied in many different forms and should not be construed as limited to the embodiments set forth herein; rather, these embodiments are provided so that this disclosure will satisfy applicable legal requirements. Thus, it should be understood that each block of the block diagrams and flowchart illustrations may be implemented in the form of a computer program product; an entirely hardware embodiment; an entirely firmware embodiment; a combination of hardware, computer program products, and/or firmware; and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some exemplary embodiments, retrieval, loading, and/or execution may be performed in parallel such that multiple instructions are retrieved, loaded, and/or executed together. Thus, such embodiments may produce specifically-configured machines performing the steps or operations specified in the block diagrams and flowchart illustrations. Accordingly, the block diagrams and flowchart illustrations support various combinations of embodiments for performing the specified instructions, operations, or steps.

Where possible, any terms expressed in the singular form herein are meant to also include the plural form and vice versa, unless explicitly stated otherwise. Also, as used herein, the term "a" and/or "an" shall mean "one or more," even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on." Like numbers refer to like elements throughout.

As used herein, "operatively coupled" may mean that the components are electronically or optically coupled and/or are in electrical or optical communication with one another. Furthermore, "operatively coupled" may mean that the components may be formed integrally with each other or may be formed separately and coupled together. Furthermore, "operatively coupled" may mean that the components may be directly connected to each other or may be connected to each other with one or more components (e.g., connectors) located between the components that are operatively coupled together. Furthermore, "operatively coupled" may mean that the components are detachable from each other or that they are permanently coupled together.

As used herein, "interconnected" may imply that each component is directly or indirectly linked to every other component or switch in the network, allowing for seamless data transfer and communication between all the components.

As used herein, "determining" may encompass a variety of actions. For example, "determining" may include calculating, computing, processing, deriving, investigating, ascertaining, and/or the like. Furthermore, "determining" may also include receiving (e.g., receiving information), accessing (e.g., accessing data in a memory), and/or the like. Also, "determining" may include resolving, selecting, choosing, calculating, establishing, and/or the like. Determining may also include ascertaining that a parameter matches a predetermined criterion, including that a threshold has been met, passed, exceeded, satisfied, etc.

It should be understood that the word "exemplary" is used herein to mean "serving as an example, instance, or illustration." Any implementation described herein as "exemplary" is not necessarily to be construed as advantageous over other implementations.

Furthermore, as would be evident to one of ordinary skill in the art in light of the disclosure, the terms "substantially" and "approximately" indicate that the referenced element or associated description is accurate to within applicable engineering tolerances.

Example Datacenter Architecture

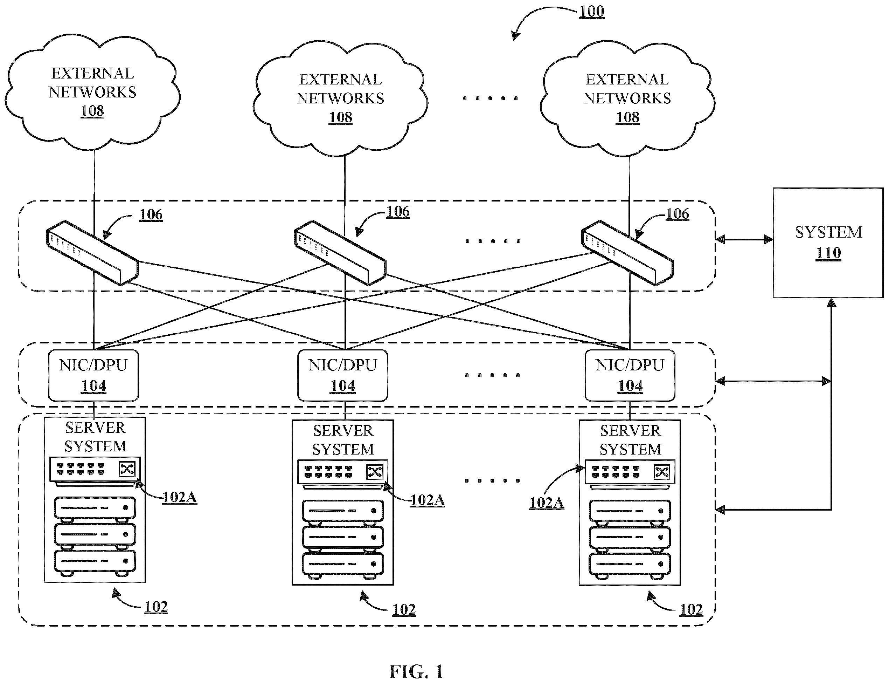

FIG. 1 illustrates a schematic diagram of an example datacenter network architecture 100, in accordance with an embodiment of the disclosure. The datacenter network architecture 100 may include server systems 102, NIC/DPUs 104, datacenter switches 106, external networks 108, and system 110. The server systems 102 may house computing resources. The NIC/DPUs 104 may act as intermediate processing and management units that facilitate data transmission between server systems 102 and datacenter switches 106. The datacenter switches 106 may manage and route data between the server systems 102 and the external networks 108. The external networks 108 may connect the datacenter network architecture 100 to external devices, services, or other datacenters, enabling communication beyond the datacenter. The system 110 may serve as a centralized management and control system within datacenter network architecture 100, overseeing resource allocation, link management, and network optimization, according to various embodiments described herein.

The server systems 102 may house multiple servers, each containing various computing resources, otherwise referred to as compute resources, nodes, hosts, and/or the like. These resources may include central processing units (CPUs), such as NVIDIA Grace™ CPUs, and graphics processing units (GPUs), such as NVIDIA® H100 Tensor Core GPUs. The servers may also include memory, such as high-bandwidth memory (HBM) for GPUs, and storage devices, such as NVMe (Non-Volatile Memory Express) SSDs for fast data access. Each server within the server systems 102 may be configured to handle specific types of workloads, such as general-purpose computing, data processing, specialized tasks like AI and ML applications, and/or the like. For example, NVIDIA® Tensor Core GPUs may be used to accelerate AI and ML workloads by performing parallel processing of large datasets. The server systems 102 may be connected to one or more datacenter switches 106, allowing the servers systems 102 to communicate with other systems within the datacenter or external networks 108. The configuration of the server systems 102 may be scalable, allowing for additional servers, such as those with NVIDIA® GPUs and CPUs, to be added or removed as needed based on computing requirements.

In some embodiments, the server systems 102 may include top-of-rack (ToR) switches 105A. The ToR switches 105A may connect each server system 102 to the broader datacenter network, typically using high-speed networking protocols such as Ethernet or InfiniBand® protocols. The ToR switches 105A may reduce cable complexity by aggregating server connections within the rack and then linking to higher-layer switches, such as datacenter switches 106, within the datacenter. Each ToR switch may be connected to every server within its rack through short cables, and the switch may then uplink to the datacenter switches 106. ToR switches 105A in the server systems 102 may also support various network features such as VLAN segmentation, load balancing, and quality of service (QoS) management, ensuring optimized traffic flow within the rack and the datacenter as a whole. In some configurations, ToR switches 105A may offer redundancy by employing multiple uplinks to datacenter switches 106, providing fault tolerance in case of a switch or connection failure.

As shown in FIG. 1, the server system 102 may be operatively coupled to NIC/DPUs 104, enabling efficient offloading of data processing and security tasks, further reducing the computational burden on the server CPUs and improving overall data flow within the rack. Each server CPU may be operatively coupled to a single NIC/DPU or simultaneously to multiple NICs/DPUs. The NIC/DPU 104, may integrate network interface controller (NIC) and data processing unit (DPU) functionalities to enhance the efficiency of data center operations. The NIC/DPU 104 may be configured to offload various network, storage, and security tasks from the server systems 102, in particular, CPUs in the server systems 102, allowing the CPUs to focus on compute-intensive workloads. The NIC/DPU 104 may facilitate high-speed data transmission, optimize data flow, and enable advanced network services with minimal impact on server performance. The NIC component within the NIC/DPU 104 may handle standard network functions, such as packet transmission and reception, supporting high-speed Ethernet or InfiniBand® protocols. By facilitating fast data transfers between the server systems 102 and external networks 108, the NIC enables efficient communication across the datacenter environment. The NIC may also support offloading network protocol processing, reducing the overhead on server systems 102, in particular, CPUs in the server systems 102, and improving overall data throughput. The DPU component of the NIC/DPU 104 may extend these capabilities by offloading more advanced processing tasks, such as data encryption and decryption, packet inspection and filtering, virtualization support, and/or the like. In example embodiments, the NIC/DPU 104 may be NVIDIA BlueField®-2 DPUs, which provide a high-performance platform for data center acceleration. The BlueField-2 architecture may include up to 8 Arm cores, enabling the NIC/DPU 104 to execute network, storage, and security tasks independently of the server systems 102, in particular, CPUs in the server systems 102. By performing these tasks closer to the data source, the NIC/DPU 104 may reduce data movement across the network, lower latency, and enhance overall system efficiency.

The NIC/DPU 104 may also include a dedicated memory subsystem, such as dynamic random-access memory (DRAM), to support local processing and ensure high-speed data access. Additionally, the NIC/DPU 104 may be configured to manage NVMe over Fabrics (NVMe-oF) storage protocols, allowing for efficient remote storage access and fast data retrieval. The combined NIC and DPU functionalities within the NIC/DPU 104 may support various advanced networking features, including traffic shaping and load balancing, remote direct memory access (RDMA), virtual machine and container isolation, and/or the like.

The datacenter switches 106 may manage the data flow between the server systems 102 and the external networks 108. The datacenter switches 106 may be responsible for routing and distributing data between servers within the datacenter and facilitating communication with external networks. Datacenter switches 106 may be configured to support various high-speed network protocols, such as Ethernet or InfiniBand® protocols, depending on the performance and bandwidth requirements of the datacenter. The datacenter switches 106 may include optical switches, which use light signals for data transmission, offering high bandwidth and low latency for long-distance communication. Alternatively, the datacenter switches 106 may include electrical switches, which rely on electronic signals and may be used for shorter distances or when lower latency is a priority. In some configurations, hybrid switches may be used, combining both optical and electrical components to balance performance and flexibility. The datacenter switches 106 may be advanced networking switches, such as Nvidia Quantum-2 switches, configured to provide high throughput capabilities. The datacenter switches 106 may operate at different layers of the network stack, including Layer 2 (data link layer) and Layer 3 (network layer), to perform switching and routing functions. Multiple datacenter switches 106 may be interconnected to provide redundancy and load balancing for reliable data transfer even if one switch fails. The datacenter switches 106 may support scalable configurations, allowing the network architecture to expand as additional server systems 102 or external networks 108 are introduced.

In certain embodiments, the number and arrangement of datacenter switches 106 within the datacenter network architecture 100 may be based on the overall network topology deployed in the datacenter environment. The choice of network topology may influence the scalability, performance, fault tolerance, and bandwidth distribution of the network, thus affecting how many switches are required and how they are interconnected. Examples of network topology may include fat-tree topology, SlimFly topology, dragonfly topology, HyperX topology, torus topology, Clos (folded-Clos) topology, mesh topology and/or the like. For instance, in a fat-tree topology, the network is structured as a multi-tiered hierarchy with equal-cost paths between any two endpoints. The fat-tree topology may be built using three layers of switches: leaf switches at the bottom layer, directly connected to the server systems 102, spine switches in the middle layer, which interconnect the leaf switches, and core switches at the top, which interconnect multiple sets of spine switches. In a SlimFly topology, the datacenter switches 106 may be arranged to minimize the average path length between servers, reducing communication latency. The total number of datacenter switches 106 may be fewer than in fat-tree topology, but their arrangement may be more complex to optimize the number of direct and indirect connections between nodes. Dragonfly topology may organize switches into groups (or "pods"), with high-bandwidth connections within each group and lower-bandwidth connections between groups. The datacenter switches 106 may be arranged into several pods, with each pod containing a set of leaf switches connected to server systems 102 and local spine switches. In addition, there may be fewer inter-pod connections than intra-pod connections. In hyperX topology, switches may be arranged in a multi-dimensional grid, with each switch connected to multiple neighboring switches in different dimensions. The total number of switches may scale with the number of dimensions and network size. In a torus topology, the datacenter switches 106 may be connected in a loop or ring structure. Torus topology may offer reduced wiring complexity and built-in redundancy, as each switch is connected to multiple adjacent switches. In larger datacenters, a higher-dimensional torus (e.g., 3D or 4D torus) may be implemented, where switches are arranged in a multi-layered grid. In a Clos topology, also known as a folded-Clos or CLOS architecture, the datacenter switches 106 may be arranged in multiple layers of switching stages, with each stage containing multiple switches. In this configuration, each server system 102 may connect to a set of leaf switches, which in turn connect to multiple spine switches. Additional spine and leaf switches may be added as the network grows, with the number of datacenter switches 106 increasing in proportion to the number of server systems and external networks connected.

The external networks 108 represent a range of connectivity options that facilitate communication between the datacenter and various external systems, such as other datacenters, cloud service providers, and/or the like. These external networks 108 may include local area networks (LANs), which connect devices within a limited geographical area, as well as WANs that span larger distances and connect multiple LANs. Additionally, external networks 108 may include cloud networks, which provide scalable resources and services hosted remotely, and private networks, which offer secure communication channels for sensitive data transfer. Other types of external networks may include virtual private networks (VPNs) that enable secure access over the internet and Content Delivery Networks (CDNs) that optimize the delivery of content to end-users. Each of these external networks may utilize various communication protocols, such as Ethernet, InfiniBand®, or MPLS (Multiprotocol Label Switching) protocols, to ensure reliable and efficient data transfer.

System 110 may manage and coordinate network resources within the datacenter network architecture 100, including resource allocation, communication optimization, and dynamic resource distribution as described herein. System 110 may interact with various network components, such as server systems 102, NIC/DPUs 104, and network switches 106, to facilitate efficient data transmission and resource management. In certain embodiments, system 110 may offload specific tasks to NIC/DPUs 104, which may handle low-level data exchanges, packet routing, and other processing tasks between server systems 102 and network switches 106. This enables system 110 to focus on high-level management tasks, such as dynamically allocating links and optimizing resource use across the datacenter. System 110 may monitor network conditions, adjust resource allocation strategies, and optimize communication to respond to changing workloads, such as AI and ML tasks that require high-bandwidth and low-latency communication. For example, system 110 may dynamically adjust the allocation of electrical and optical links based on network traffic patterns, manage inter-switch communication, and ensure uniform data distribution across the infrastructure. In scenarios involving all-to-all communication patterns, system 110 may utilize the described methodologies to allocate bandwidth and adjust communication paths to minimize congestion and balance data loads. Additionally, system 110 may directly communicate with network switches 106 to configure routing paths and ensure efficient data flows between server systems 102 and external networks 108. By dynamically managing resources, including the activation and deactivation of links between switches 106, system 110 may optimize network performance and scalability, adapting to varying computational demands and enabling efficient execution of high-performance computing tasks.

Within server systems 102, system 110 may oversee the distribution of computational tasks and manage interconnects between CPUs, GPUs, and other processing resources. For example, system 110 may allocate computational resources and coordinate data exchanges between CPUs and GPUs based on workload requirements, enabling consistent and efficient operation for tasks such as AI and ML. System 110 may monitor resource usage and communication patterns, ensuring that data flow is maintained across processing nodes without compromising bandwidth or system performance. By dynamically managing resource allocation, system 110 may adapt to varying computational loads and communication needs, as described herein.

Overall, system 110 may serve as the central control entity for resource allocation and data flow management within the data center network architecture. By coordinating with NIC/DPUs 104, server systems 102, and/or network switches 106, system 110 may ensure efficient utilization of computational and network resources. This includes maintaining consistent data flow across the infrastructure, managing communication paths to minimize congestion, and adapting resource allocation strategies in response to changing operational demands.

It should be noted that the description provided herein is merely one embodiment of the datacenter network architecture and the associated components, including the datacenter switches 106 and the NIC/DPU 104. Various modifications, alterations, and adaptations may be made without departing from the scope of the disclosure. The specific configurations, components, and functionalities described are illustrative and may be replaced or modified in other embodiments depending on the particular requirements of the datacenter environment. For example, different network topologies, alternative processing units, or variations in server configurations may be used to achieve similar objectives. As such, the scope of the invention should not be limited by the described embodiment.

Example Server System Architecture

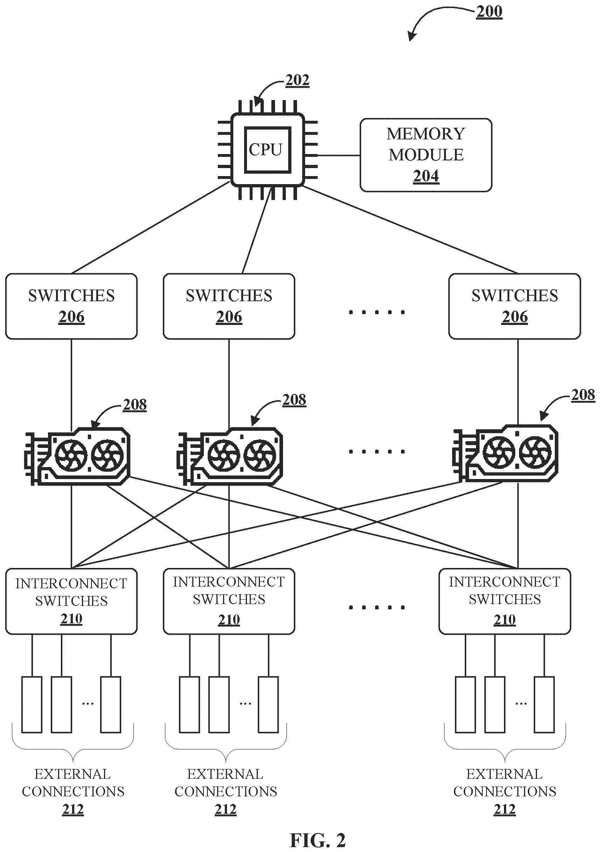

FIG. 2 illustrates a schematic diagram of an example server system architecture 200, some or all of which may be included in the server system 102 of FIG. 1, in accordance with an embodiment of the disclosure. The server system architecture 200 may include a CPU 202, memory modules 204, switches 206, GPUs 208, interconnect switches 210, and external connections 212. The CPU 202 may manage operations within the server system and communicate with the other components. The memory modules 204 may provide fast access to data for the CPU 202. The switches 206 may connect the CPU to the GPUs 208, while the interconnect switches 210 may facilitate communication between the GPUs 208. The external connections 212 may allow the server system to communicate with external networks or other systems.

The CPU 202 may manage overall operations within a server system (e.g., server system 102). The CPU 202 may execute instructions, process data, and control communication between the other components, including the memory module 204, switches 206, and GPUs 208. The CPU 202 may be connected to the memory module 204, providing fast access to data required for computational tasks. The CPU 202 may communicate with the GPUs 208 through the switches 206, enabling the CPU 202 to offload specialized computing tasks such as graphics rendering, AI, and ML workloads, and/or the like. Additionally, the CPU 202 may manage external communication via external connections 212, facilitating data exchange between the server system 102 and external networks 108 or other systems.

In some embodiments, the server system architecture 200 may be scalable to include multiple CPUs that are the same or similar to CPU 202, each managing its own set of resources such as memory, GPUs, and network connections. In such configurations, each CPU may communicate with other CPUs within the system via high-speed interconnects, such as NVLink® interconnects, to coordinate processing tasks and balance workloads. Such a distributed architecture may improve performance by allowing parallel processing across multiple CPUs, which may be particularly useful for data-intensive applications such as AI, ML, and high-performance computing. The server system architecture 200 may allow for the addition of more CPUs as needed, depending on the computing requirements of the workload.

The memory module 204 may provide fast data access for the CPU 202, allowing the CPU to efficiently execute instructions and process data. The memory module 204 may include various types of memory, such as DRAM or high-bandwidth memory (HBM), depending on the specific performance requirements. The memory module 204 may be directly connected to the CPU 202 to minimize latency and enable high-speed data transfers between the memory and the CPU. The size and type of the memory module 204 may be scalable, allowing for adjustments based on the workload and data processing needs of the server system. Multiple memory modules that are the same or similar to the memory module 204 may be included in the architecture to support additional CPUs or to increase memory capacity as required by the computing tasks.

The switches 206 may facilitate communication between the CPU 202, GPUs 208, and other components within the server system 102. These switches 206 may be responsible for routing data between these components, ensuring efficient data flow and coordination during processing tasks. The switches 206 may include various types of technologies, such as Peripheral Component Interconnect Express (PCIe) switches, which connect the CPU to multiple GPUs, enabling high-speed data transfers, Ethernet switches for managing communication with external networks or InfiniBand® switches designed for low-latency, high-throughput data transfers between servers in a high-performance computing environment, and/or the like. The architecture of the switches 206 may be scalable, accommodating additional components as needed to meet increasing performance demands. Furthermore, the switches 206 may provide features such as load balancing and fault tolerance, which improve the reliability and efficiency of data transmission within the server system.

The GPUs 208 may provide specialized processing capabilities for parallel computation tasks, such as those involved in AI, ML, and data-intensive computing workloads. Each GPU 208 may be connected to the CPU 202 via the switches 206, allowing the CPU 202 to offload certain tasks to the GPUs 208 for faster processing. The GPUs 208 may be configured to communicate with one another, either directly or through interconnect switches 210, to enable coordinated parallel processing and data sharing. The GPUs 208 may include HBM for faster access to data during computation. The number and type of GPUs 208 in the system may be scalable, allowing the architecture to accommodate varying performance needs depending on the specific workload. For example, the GPUs 208 may include NVIDIA® H100 Tensor Core GPUs optimized for deep learning and AI inference, or NVIDIA® A100 GPUs designed for high-performance computing and data analytics. The GPUs 208 may be used individually or in combination to meet the demands of various computational tasks.

In specific embodiments, the CPU 202 and/or the GPUs 208, or portions or components thereof, may be embodied as or include a chip or chipset. In other words, the CPU 202 and/or the GPUs 208 may include physical packages (e.g., chips) including materials, components, and/or wires on a structural assembly (e.g., a baseboard). The structural assembly may provide physical strength, conservation of size, and/or limitation of electrical interaction for component circuitry included thereon. The CPU 202 and/or the GPUs 208, may therefore, in some cases, be configured to implement an embodiment of the disclosure on a single chip or as a single "system on a chip (SoC)." As such, in some cases, a chip or chipset may constitute means for performing one or more operations for providing the functionalities described herein. In this configuration, the CPU may be coupled to a GPU via die-to-die (D2D) interconnects, chip-to-chip (C2C) interconnects, such as a Ground-Referenced Signaling (GRS) interconnect, and/or the like, allowing for low-latency communication and high bandwidth between the CPU and GPU. Additionally, the CPU can connect to multiple GPUs using both D2D/C2C interconnects and high-speed interconnects, such as PCIe interconnects.

The interconnect switches 210 may facilitate communication between the GPUs 208, enabling high-speed data transfer and coordination for parallel processing tasks. These switches may include various types of interconnect technologies, such as NVIDIA® NVSwitches or other high-performance fabric switches, depending on the configuration. The high-speed interconnect switches 210 may allow multiple GPUs 208 to be interconnected in a fully integrated fabric, providing low-latency, high-bandwidth communication between the GPUs for efficient execution of AI, ML, and high-performance computing tasks. The interconnect switches 210 may support scalability, allowing additional GPUs 208 to be added as needed. These interconnect switches 210 may also manage data flow between GPUs 208 and the CPU 202 via the switches 206, optimizing data throughput for complex computational workloads. In some configurations, the interconnect switches 210 may support hybrid or optical interconnect technologies to enhance performance based on system requirements.

The external connections 212 may provide interfaces between the server system 102 and external networks (e.g., external networks 108 shown in FIG. 1), via intermediate components (e.g., datacenter switches 106, NIC/DPU 104, and/or the like), facilitating communication with other datacenters, cloud service providers, or wide area networks (WANs). These connections may include pluggable modules (e.g., OSFP modules) or similar high-speed transceivers designed for efficient data transmission. The external connections 212 may support various networking protocols, such as Ethernet or InfiniBand® protocols, depending on the requirements for data transfer speed and distance. Each external connection 212 may be linked to the switches 206 or interconnect switches 210, allowing for seamless data flow between the server system and external entities. The server system architecture may also support redundancy in external connections 212 to ensure continuous network availability, even in the event of a failure in one connection.

It should be understood that the server system architecture 200 described herein is merely one embodiment, and various modifications, substitutions, and alternatives may be made without departing from the scope of the disclosure. The specific components, configurations, and functionalities described are illustrative examples and may vary depending on the specific requirements of the server system or datacenter environment. For example, different types of CPUs, GPUs, memory modules, interconnect switches, and external connections may be used, and the architecture may be adapted to support alternative technologies or configurations. The server system architecture 200 may also be implemented in other forms or combined with additional hardware or software components to meet particular performance, scalability, or workload needs. Accordingly, the invention is not limited to the described embodiment.

Example High-Performance Cluster

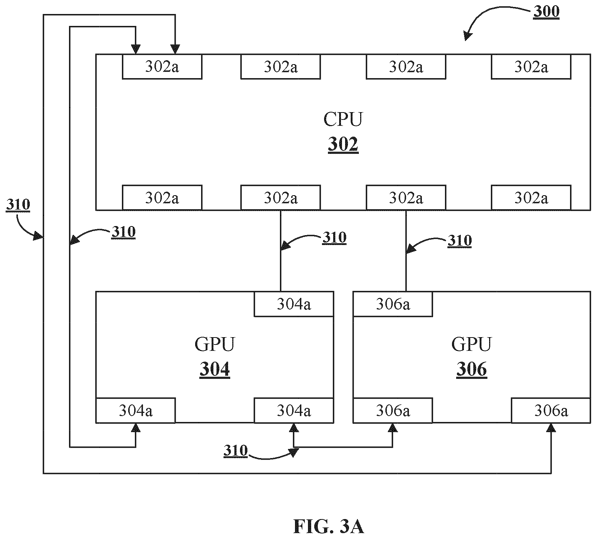

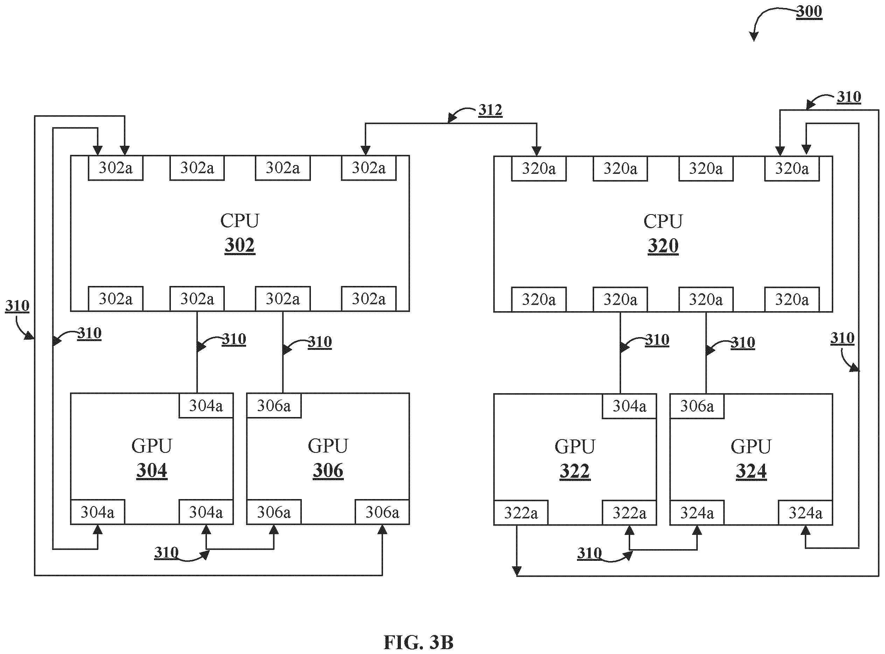

FIGS. 3A and 3B illustrate example configurations of HPC clusters within a server system, such as server system 102, in accordance with embodiments described herein. These configurations demonstrate the integration of CPUs and GPUs to enable efficient parallel processing, data sharing, and network connectivity within the server system, consistent with the structure and functionality described in FIGS. 1 and 2.

FIG. 3A illustrates an example configuration of an HPC cluster 300 within server system 102, in accordance with an embodiment of the disclosure. Server system 102, as described in FIGS. 1 and 2, is configured to support computationally demanding tasks by integrating a CPU 302 with multiple GPUs, such as GPU 304 and GPU 306, allowing for parallel processing, efficient data sharing, and network connectivity.

In this embodiment, CPU 302 within server system 102 may be connected to GPU 304 and GPU 306 via an interconnect 310. Interconnect 310 may utilize corresponding ports 305A on CPU 302, 304a on GPU 304, and 306a on GPU 306 to facilitate efficient data flow between the CPU and GPUs. The ports used for interconnect 310 may vary depending on the type of connection. For example, if interconnect 310 is a D2D) or C2C interconnect, such as a GRS interconnect, ports 305A, 304a, and 306a may be configured as GRS-compatible ports, which provide a high-bandwidth, low-latency pathway for data exchange directly on the chip or package. These GRS ports enable low-power, high-speed connections that minimize latency and optimize data exchange efficiency, allowing CPU 302 to handle workload distribution and data synchronization across GPUs 304 and 306 effectively.

Alternatively or additionally, interconnect 310 may be a high-speed PCIe interconnect, operatively coupling CPU 302 with GPUs 304 and 306 through PCIe-compatible ports 305A, 304a, and 306a. In this embodiment, the ports may be configured as multi-lane PCIe ports, such as PCIe x16, which provides a high-bandwidth, scalable data transfer channel. The PCIe interconnect 310 may support dynamic link width adjustments, enabling bandwidth to scale according to the intensity of the processing tasks, thereby optimizing resource allocation and supporting efficient data transfer across components. Such a configuration may be advantageous for workloads with variable data transfer needs, as it allows efficient sharing of PCIe bandwidth across other components within the server system, enhancing overall system performance.

As shown in FIG. 3A, GPUs 304 and 306 may also be operatively interconnected via an interconnect 312 to support direct GPU-to-GPU communication. Interconnect 312 may utilize corresponding ports 304a on GPU 304 and 306a on GPU 306, establishing a dedicated pathway for data exchange between the GPUs. In certain embodiments, interconnect 312 may be a high-speed NVLink® connection, providing a dedicated communication channel that enables GPUs 304 and 306 to synchronize data independently of CPU coordination. The NVLink® interconnect allows for low-latency, high-throughput GPU-to-GPU communication, which is particularly beneficial for tasks that rely heavily on inter-GPU data exchange, such as matrix computations and simulations, thereby enhancing processing throughput within the server system.

FIG. 3B illustrates an example configuration of an HPC cluster 300 within server system 102, featuring a dual-CPU setup with CPUs 302 and 320, each operatively coupled to multiple GPUs. This configuration may enable improved parallel processing and resource sharing across CPUs and GPUs within the same server system, supporting computationally demanding applications requiring substantial processing power, such as AI, machine learning, and simulations.

In this embodiment, CPU 302 is connected to GPUs 304 and 306 via interconnects 310, configured in a manner similar to the coupling described in FIG. 3A. Likewise, CPU 320 is operatively coupled to GPUs 322 and 324 via interconnects 310. Additionally, GPUs 304 and 306 are interconnected via interconnect 310, enabling direct GPU-to-GPU communication within the CPU 302 domain, while GPUs 322 and 324 are similarly interconnected within the CPU 320 domain, allowing for direct data exchange between GPUs within each respective CPU domain, in a configuration similar to that illustrated in FIG. 3A.

As illustrated in FIG. 3B, CPUs 302 and 320 may also be interconnected via a high-speed interconnect 312, which facilitates direct communication between the two CPUs. Interconnect 312 may utilize ports 305A on CPU 302 and 320a on CPU 320, allowing data to be exchanged directly between the CPUs without external routing. In some embodiments, interconnect 312 may be an NVLink® or other high-speed bus, providing a low-latency pathway for inter-CPU coordination. Such a setup supports synchronized task management and resource sharing across CPUs, enhancing processing efficiency for multi-threaded or distributed applications.

It should be noted that FIGS. 3A and 3B, and the associated description, are presented as example configurations of HPC clusters within a server system, such as server system 102, in accordance with certain embodiments. These configurations, including the integration of CPUs, GPUs, and interconnects, are illustrative of potential architectures designed to facilitate parallel processing, data sharing, and network connectivity as described herein. Various modifications, substitutions, and rearrangements may be made to the components, interconnect types, and communication pathways without departing from the scope of the disclosure. For instance, different types of interconnects, alternative processing units, or additional memory configurations may be used, and the layout of CPUs and GPUs may vary depending on specific application requirements, processing needs, and hardware constraints. Accordingly, the scope of the disclosure is not limited to the specific configurations illustrated in FIGS. 3A and 3B but encompasses all variations and modifications within the spirit and scope of the disclosed embodiments.

Example Network Environment for Allocation of Network Resources

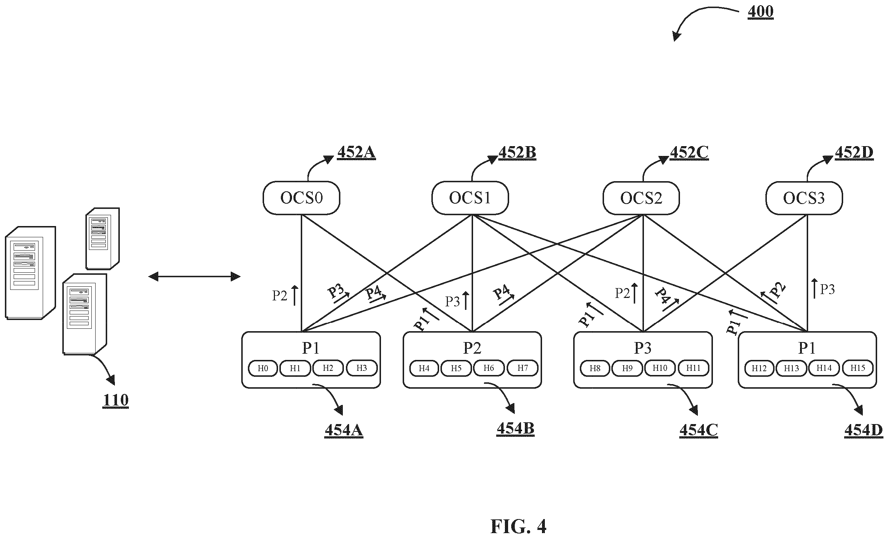

FIG. 4 illustrates an example network environment 400 for efficient allocation of network resources for optimized data communication, in accordance with an embodiment of the disclosure. As shown in FIG. 4, the network environment 400 may include a system 110, a plurality of optical switches 455A, 455B, 452C, 452D, and a plurality of PODs 454A, 454B, 454C, 454D. In example embodiments, each POD (e.g., 454A) may have a fully dedicated communication link to every other POD (e.g., 454B, 454C, or 454D) via corresponding optical switches (E.g., 455A, 455B, or 452C), thereby ensuring a direct communication path between the plurality of PODs 454A, 454B, 454C, 454D. In specific embodiments incorporating optical switches (e.g., 455A, 455B, 452C, 452D), network paths can be reconfigured dynamically to adapt to changing traffic patterns and demands. In a network configured for maximum connectivity, this dynamic capability is further leveraged by the direct connections, allowing the network to maintain optimal performance through intelligent routing. It is to be understood that the structure of the network environment and its components, connections and relationships, and their functions are meant to be exemplary, only, and are not meant to limit implementations of the embodiments described and/or claimed in this document.

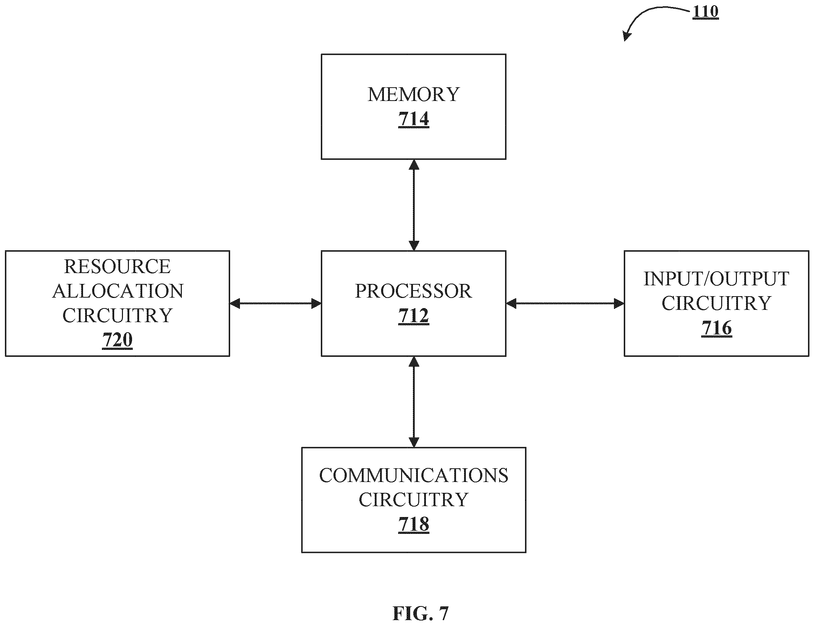

As shown in FIG. 4, the network environment 400 may include a system 110, described in further detail in FIG. 7.

The system 110 may communicate with one or more components (e.g., the plurality of PODs 454A, 454B, 454C, 454D) associated with the network environment 400 to execute embodiments of the invention described herein. The system 110 may be implemented in a number of different forms. For example, the system 110 may be implemented as a standard server, or multiple times in a group of such servers. Additionally, the system 110 may also be implemented as part of a rack server system or a personal computer such as a laptop computer. Alternatively, components from the system 110 may be combined with one or more other same or similar systems, and an entire system 110 may be made up of multiple computing devices communicating with each other. The system 110 may represent various forms of servers, such as web servers, database servers, file servers, or the like, various forms of digital computing devices, such as laptops, desktops, workstations, or the like, or any other auxiliary network devices, Internet-of-things devices, electronic kiosk devices, mainframes, or the like, or any combination of the aforementioned.

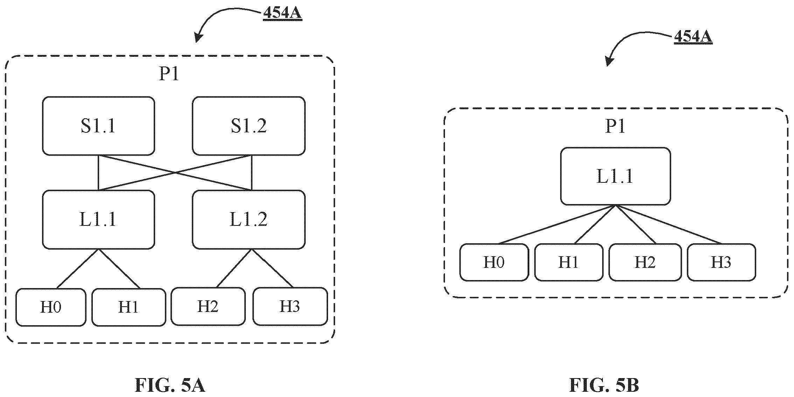

As shown in FIG. 4, each POD in the plurality of PODs 454A, 454B, 454C, 454D may refer to a segment or unit within the network architecture that may consolidate networking resources (e.g., switches) and services for efficient delivery to a group of end-users or devices (e.g., hosts). In specific embodiments, a POD may be a physical part of network architecture or a logical grouping within a virtualized environment. In a physical sense, a POD may include tangible components such as cables, switches, routers, and/or the like. In a virtual sense, a POD may represent the logical grouping of network resources assigned to certain tasks or services. Each POD may be customized according to the specific requirements of the services or applications it supports. For example, a POD designed for high-compute tasks may have a different configuration than one optimized for storage or network-intensive workloads. In example embodiments, a POD may provide essential network services to the connected hosts (e.g., hosts H0, H1, H2, H3 in P1, hosts H4, H5, H6, H7 in P2, and so on), such as access control, connectivity, load balancing, and possibly network security functions, thus serving as a central point for service management. In one embodiment, a POD may include leaf switches that are operatively coupled to the hosts and spine switches that interconnect the leaf switches, forming a fully connected network therewithin, as described in more detail in FIG. 5A. In another embodiment, a POD may include leaf switches that are operatively coupled to the hosts, as described in more detail in FIG. 5B.

As shown in FIG. 4, the plurality of PODs 454A, 454B, 454C, 454D may be interconnected via the plurality of optical switches 455A, 455B, 452C, 452D. Each optical switch in the plurality of optical switches 455A, 455B, 452C, 452D may be high speed switches that use light signals for switching and routing data. In specific embodiments, the optical switches 455A, 455B, 452C, 452D may act as intermediaries, routing the light signals between the plurality of PODs 454A, 454B, 454C, 454D via optical circuit connections. In example embodiments, the plurality of optical switches 455A, 455B, 452C, 452D may employ communication protocols such as Optical Transport Network (OTN) or Dense Wavelength Division Multiplexing (DWDM) to facilitate communication between the plurality of PODs 454A, 454B, 454C, 454D, allowing for high-speed, low-latency communication between each leaf switch pair, effectively extending the network's reach and capability.

In some embodiments, each POD may include a number of hosts allocated thereunder. For the purposes of clarity in the ensuing description, hosts may be labeled sequentially as H0, H1, H2,...Hn. Each host, Hi, may be equipped with ports that allow the host to be connected to a POD, Px. In example embodiments, the hosts may be evenly and symmetrically distributed across the available PODs. For instance, if there is a total of 4 PODs (e.g., P1, P2, P3, P4) as shown in FIG. 4, and a total of 16 hosts, each of the 4 PODs will have an equal distribution of hosts, with each POD facilitating connections to 4 distinct hosts. In this example, H0, H1, H2, and H3 may connect to P1 (shown in FIGs. 5A and 5B); H4, H5, H6, and H7 (not shown) may connect to P2; H8, H9, H10, and H11 (not shown) may connect to P3; and H12, H13, H14, and H45 (not shown) may connect to P4. Subsequently, the plurality of PODs 454A, 454B, 454C, 454D may interface with the plurality of optical switches 455A, 455B, 452C, 452D to facilitate inter-POD communication. For instance, hosts (e.g., H0) under P1 may communicate with hosts (e.g., H4) under P2 via optical switch OCS0; hosts (e.g., H1) under P1 may communicate with hosts (e.g., H8) under P3 via optical switch OCS1; and so on.

The network environment described in FIG. 4 may represent an example or a subset of the broader datacenter architecture illustrated in FIGS. 1-3. Both environments may leverage hierarchical network designs to manage and coordinate communication between interconnected components, such as PODs, server systems, and processing units. The principles described in FIG. 4 for managing resources and dynamically configuring network paths through optical switches can be directly extended to the datacenter context, where system 110 oversees resource distribution, monitors network conditions, and optimizes communication flows to support varying workloads.

The network environment described in FIG. 4 may represent an example or a subset of the broader datacenter architecture illustrated in FIGS. 1-3. Both environments may utilize hierarchical network designs to manage and coordinate communication between interconnected components, such as PODs, server systems, and processing units. The resource management principles described in FIG. 4, including dynamic configuration of network paths through optical switches, may be applied within the datacenter context shown in FIGS. 1-3, where system 110 oversees resource distribution, monitors network conditions, and adjusts communication flows to address varying workloads.

The PODs in FIG. 4 may operate as modular network segments that consolidate resources and enable communication between hosts through optical switches. This modularity may parallel the role of server systems 102, ToR switches, and NIC/DPUs in FIGS. 1-3, which collectively manage data exchanges within the datacenter and with external networks. Both configurations may support scalability, dynamic resource allocation, and flexibility to meet computational demands. For example, the high-speed interconnections between PODs via optical switches in FIG. 4 may correspond to the use of NIC/DPUs and datacenter switches in FIGS. 1-3 to optimize communication between server systems and external networks.

The hierarchical topology of FIG. 4, which includes leaf and spine switches within each POD, may align with the scalable topologies presented in FIGS. 1-3, such as fat-tree, mesh, or torus configurations. Both sets of topologies may support efficient routing and load balancing, minimizing bottlenecks and ensuring uniform data distribution. The interconnects between CPUs and GPUs illustrated in FIGS. 2 and 3A-3B may further extend the modular approach described in FIG. 4, facilitating high-bandwidth communication within server systems and integrating with the broader network structure. By combining the modular POD architecture of FIG. 4 with the datacenter configurations of FIGS. 1-3, the disclosed embodiments may provide a unified framework for managing resources and maintaining consistent data flow across high-performance computing environments. This integrated framework may enable datacenters to support computationally intensive applications, such as AI and ML

FIGS. 5A and 5B illustrate example configurations of PODs as illustrated in FIG. 4, in accordance with an embodiment of the invention. As shown in FIG. 5A, a POD may be represented as a plurality of spine switches fully interconnecting a plurality of leaf switches, and a plurality of hosts that are distributed among the plurality of leaf switches and operatively coupled therewith via ports. Here, leaf switches L1.1, L1.2 may serve as the primary layer of network distribution within P1, acting as an intermediary, interconnecting the hosts H0, H1, H2, and H3. Each leaf switch L1.1, L1.2 may include a plurality of uplink ports. These uplink ports may be configured to operatively couple the leaf switches L1.1, L1.2 to spine switches S1.1, S1.2. Spine switches S1.1, S1.2 may serve as a secondary layer of network distribution within P1, acting as an intermediary, interconnecting the leaf switches L1.1, L1.2. Additionally, each leaf switch L1.1, L1.2 may include a plurality of downlink ports. These downlink ports may be configured to operatively couple the leaf switches L1.1, L1.2 to the hosts H0, H1, H2, and H3. A host may be a single computational unit or a cluster of computational units interconnected via an internal network, functioning collectively as a single entity and configured to perform computational tasks and facilitate data exchange therewithin. In some embodiments, the communication links between the spine switches S1.1, S1.2, the leaf switches L1.1, L1.2, and the hosts H0, H1, H2, H3 may be achieved via Ethernet cables, employing protocols such as Infiniband, NVLink, Transport Control Protocol (TCP)/Internet Protocol (IP), and/or the like. Similarly, leaf switches L2.1, L2.2 and spine switches S2.1, S2.2 may serve as the network distribution layers within P2, interconnecting the hosts H4, H5, H6, and H7, leaf switches L3.1, L3.2 and spine switches S3.1, S3.2 may serve as network distribution layers within P3, interconnecting the hosts H8, H9, H10, H11, and so on.

In alternative embodiments, as shown In FIG. 5B, a POD may be a leaf switch having a plurality of hosts distributed thereunder. For example, P1 may be a leaf switch L1.1 under which are corresponding hosts H0, H1, H2, H3. Similarly, P2 may be a leaf switch L2.1 under which are corresponding hosts H4, H5, H6, H7, P3 may be a leaf switch L3.1 under which are corresponding hosts H8, H9, H10, H11, and so on. It is to be understood that the structure of a POD and its components, connections and relationships, and their functions are meant to be exemplary, only, and are not meant to limit implementations of the embodiments described and/or claimed in this document. In one example, the POD may include more, fewer, or different components. In one example, some or all of the portions of the POD may be combined into a single portion, or all of the portions of the POD may be separated into two or more distinct portions.

Example Network Environment for Optimized Data Communication

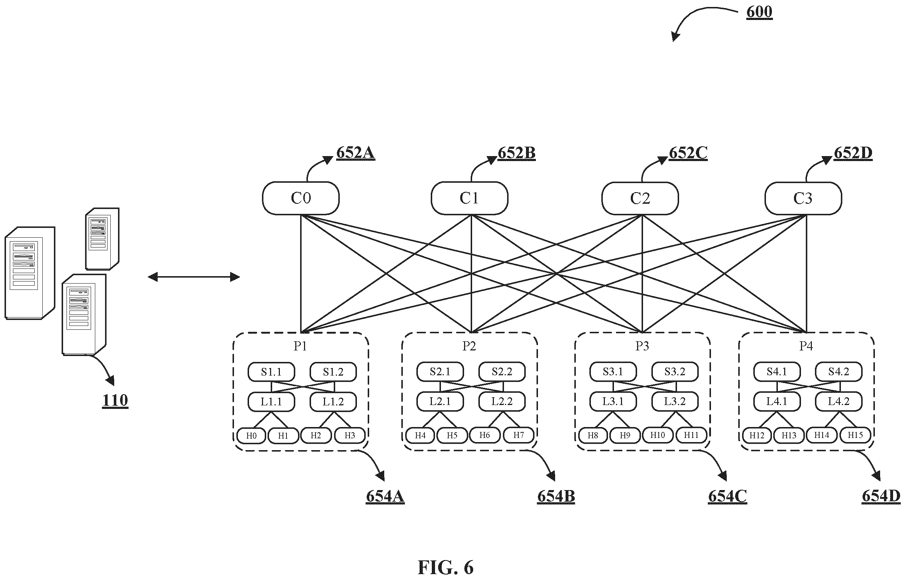

FIG. 6 illustrates an example network environment 100 for optimized data communication, in accordance with an embodiment of the disclosure. As shown in FIG. 6, the network environment 100 may include a system 110, a plurality of switches 652A, 652B, 652C, 652D, and a plurality of PODs 654A, 654B, 654C, 654D. In example embodiments, each POD (e.g., 654A) may have a fully dedicated communication link to every other POD (e.g., 654B, 654C, or 654D) via corresponding switches (e.g., 652A, 652B, or 652C). It is to be understood that the structure of the network environment and its components, connections and relationships, and their functions are meant to be exemplary, only, and are not meant to limit implementations of the embodiments described and/or claimed in this document.

As shown in FIG. 6, the network environment 100 may include a system 110, described in further detail in FIG. 7. The system 110 may communicate with one or more components (e.g., the plurality of PODs 654A, 654B, 654C, 654D) associated with the network environment 100 to execute embodiments of the invention described herein. The system 110 may be implemented in a number of different forms. For example, the system 110 may be implemented as a standard server, or multiple times in a group of such servers. Additionally, the system 110 may also be implemented as part of a rack server system or a personal computer such as a laptop computer. Alternatively, components from the system 110 may be combined with one or more other same or similar systems, and an entire system 110 may be made up of multiple computing devices communicating with each other. The system 110 may represent various forms of servers, such as web servers, database servers, file servers, or the like, various forms of digital computing devices, such as laptops, desktops, workstations, or the like, or any other auxiliary network devices, Internet-of-things devices, electronic kiosk devices, mainframes, or the like, or any combination of the aforementioned.

As shown in FIG. 6, each POD in the plurality of PODs 654A, 654B, 654C, 654D may refer to a segment or unit within the network architecture that may consolidate networking resources (e.g., switches) and services for efficient delivery to a group of end-users or devices (e.g., hosts). In specific embodiments, a POD may be a physical part of network architecture or a logical grouping within a virtualized environment. In a physical sense, a POD may include tangible components such as cables, switches, routers, and/or the like. In a virtual sense, a POD may represent the logical grouping of network resources assigned to certain tasks or services. Each POD may be customized according to the specific requirements of the services or applications it supports. For example, a POD designed for high-compute tasks may have a different configuration than one optimized for storage or network-intensive workloads. In example embodiments, a POD may provide essential network services to the connected hosts, such as access control, connectivity, load balancing, and possibly network security functions, thus serving as a central point for service management.

In some embodiments, as shown in FIG. 6, each POD may be represented as a plurality of spine switches fully interconnecting a plurality of leaf switches, and a plurality of hosts that are distributed among the plurality of leaf switches and operatively coupled therewith via ports. For example, in POD P1 654A, leaf switches L1.1, L1.2 may serve as the primary layer of network distribution within P1, acting as an intermediary and interconnecting the hosts H0, H1, H2, and H3. Each leaf switch L1.1, L1.2 may include a plurality of uplink ports. These uplink ports may be configured to operatively couple the leaf switches L1.1, L1.2 to spine switches S1.1, S1.2. Spine switches S1.1, S1.2 may serve as a secondary layer of network distribution within P1, acting as an intermediary and interconnecting the leaf switches L1.1, L1.2. Additionally, each leaf switch L1.1, L1.2 may include a plurality of downlink ports. These downlink ports may be configured to operatively couple the leaf switches L1.1, L1.2 to the hosts H0, H1, H2, and H3. Similarly, leaf switches L2.1, L2.2 and spine switches S2.1, S2.2 may serve as the network distribution layers within P2, interconnecting the hosts H4, H5, H6, and H7; leaf switches L3.1, L3.2 and spine switches S3.1, S3.2 may serve as network distribution layers within P3, interconnecting the hosts H8, H9, H10, H11; and so on. A host may be a single computational unit or a cluster of computational units interconnected via an internal network, functioning collectively as a single entity, and configured to perform computational tasks and facilitate data exchange therewithin. In some embodiments, the communication links between the spine switches S1.1, S1.2, the leaf switches L1.1, L1.2, and the hosts H0, H1, H2, H3 may be achieved via Ethernet cables, employing protocols such as Infiniband, NVLink, Transport Control Protocol (TCP)/Internet Protocol (IP), and/or the like.

As shown in FIG. 6, the plurality of PODs 654A, 654B, 654C, 654D may be interconnected via the plurality of switches 652A, 652B, 652C, 652D. In some embodiments, the plurality of switches 652A, 652B, 652C, 652D may be core switches that serve as the highest hierarchical level in the network architecture, acting as a central aggregation point, facilitating high-capacity data transfer among the plurality of PODs 654A, 654B, 654C, 654D. In some embodiments, the communication links among the plurality of switches 652A, 652B, 652C, 652D may also be achieved via Ethernet cables, employing protocols such as Infiniband, NVLink, Transport Control Protocol (TCP)/Internet Protocol (IP), and/or the like.

In some embodiments, each POD may include a number of hosts allocated thereunder. For the purposes of clarity in the ensuing description, hosts may be labeled sequentially as H0, H1, H2,...Hn. Each host, Hi, may be equipped with ports that allow the host to be connected to a POD, Px. In example embodiments, the hosts may be evenly and symmetrically distributed across the available PODs. For instance, if there is a total of 4 PODs (e.g., P1, P2, P3, P4) as shown in FIG. 6, and a total of 16 hosts, each of the 4 PODs will have an equal distribution of hosts, with each POD facilitating connections to 4 distinct hosts. In this example, H0, H1, H2, and H3 may connect to P1; H4, H5, H6, and H7 may connect to P2; H8, H9, H10, and H11 may connect to P3; and H12, H13, H14, and H65 may connect to P4. Subsequently, the plurality of PODs 654A, 654B, 654C, 654D may interface with the plurality of switches 652A, 652B, 652C, 652D to facilitate inter-POD communication. For instance, hosts (e.g., H0) under P1 may communicate with hosts (e.g., H4) under P2 via core switch C0; hosts (e.g., H1) under P1 may communicate with hosts (e.g., H8) under P3 via core switch C1; and so on.

The network environment described in FIG. 6 may represent an example or a subset of the broader datacenter architecture illustrated in FIGS. 1-3. Specifically, the network environment in FIG. 6 may correspond to a portion of the datacenter responsible for managing inter-POD communication and resource allocation. The structure of PODs in FIG. 6, including interconnected leaf and spine switches, may align with similar configurations within the datacenter architecture in FIGS. 1-3, where server systems, ToR switches, and datacenter switches may perform comparable roles in routing and distributing data. In FIG. 6, the PODs may provide a dedicated framework for managing network traffic among hosts, with each POD connected through core switches. This may be seen as a subset of the broader datacenter environment in FIGS. 1-3, where server systems and their associated ToR switches may integrate with NIC/DPUs and datacenter switches to manage both network traffic and computational workloads. The network environment in FIG. 6 may thus focus on the interconnectivity of PODs, while the datacenter architecture in FIGS. 1-3 may incorporate additional layers of resource management and computational coordination across CPUs, GPUs, and NIC/DPUs.

System 110 in FIG. 6 may manage resource allocation and data flow within the network environment, representing a specific example of the broader functionalities performed by system 110 in FIGS. 1-3. While system 110 may coordinate communication among PODs and switches, system 110 may extend these operations to include computational resource distribution and interaction with server systems. This relationship illustrates how the network environment in FIG. 6 may serve as a focused implementation of certain aspects of the datacenter architecture in FIGS. 1-3, contributing to the overall operation of the datacenter.

It is to be understood that the structure of a POD and its components, connections and relationships, and functions, are meant to be exemplary only, and are not meant to limit implementations of the embodiments described and/or claimed in this document. In one example, the POD may include more, fewer, or different components. In one example, some or all of the components of the POD may be combined into a single portion, or all of the portions of the POD may be separated into two or more distinct portions.

Example System Circuitry

FIG. 7 illustrates a schematic block diagram of example circuitry, some or all of which may be included in the system 110. As shown in FIG. 7, the system 110 may include a processor 712, a memory 714, input/output circuitry 716, communications circuitry 718, and resource allocation circuitry 720.

Although the term "circuitry" as used herein with respect to components 712-720 is described in some cases using functional language, it should be understood that the particular implementations necessarily include the use of particular hardware configured to perform the functions associated with the respective circuitry as described herein. It should also be understood that certain of these components 712-720 may include similar or common hardware. For example, two sets of circuitries may both leverage use of the same processor, network interface, storage medium, or the like to perform their associated functions, such that duplicate hardware is not required for each set of circuitries. It will be understood in this regard that some of the components described in connection with the system 110 may be housed together, while other components are housed separately (e.g., a controller in communication with the system 110). While the term "circuitry" should be understood broadly to include hardware, in some embodiments, the term "circuitry" may also include software for configuring the hardware. For example, in some embodiments, "circuitry" may include processing circuitry, storage media, network interfaces, input/output devices, and the like. In some embodiments, other elements of the system 110 may provide or supplement the functionality of particular circuitry. For example, the processor 712 may provide processing functionality, the memory 714 may provide storage functionality, the communications circuitry 718 may provide network interface functionality, and the like.

In some embodiments, the processor 712 (and/or co-processor or any other processing circuitry assisting or otherwise associated with the processor) may be in communication with the memory 714 via a bus for passing information among components of, for example, the system 110. The memory 714 may be non-transitory and may include, for example, one or more volatile and/or non-volatile memories, or some combination thereof. In other words, for example, the memory 714 may be an electronic storage device (e.g., a non-transitory computer readable storage medium). The memory 714 may be configured to store information, data, content, applications, instructions, or the like, for enabling an apparatus, e.g., the system 110, to carry out various functions in accordance with example embodiments of the disclosure.

Although illustrated in FIG. 7 as a single memory, the memory 714 may comprise a plurality of memory components. The plurality of memory components may be embodied on a single computing device or distributed across a plurality of computing devices. In various embodiments, the memory 714 may comprise, for example, a hard disk, random access memory, cache memory, flash memory, a compact disc read only memory (CD-ROM), digital versatile disc read only memory (DVD-ROM), an optical disc, circuitry configured to store information, or some combination thereof. The memory 714 may be configured to store information, data, applications, instructions, or the like for enabling the system 110 to carry out various functions in accordance with example embodiments discussed herein. For example, in at least some embodiments, the memory 714 may be configured to buffer data for processing by the processor 712. Additionally, or alternatively, in at least some embodiments, the memory 714 may be configured to store program instructions for execution by the processor 712. The memory 714 may store information in the form of static and/or dynamic information. This stored information may be stored and/or used by the system 110 during the course of performing its functionalities.

The processor 712 may be embodied in a number of different ways and may, for example, include one or more processing devices configured to perform independently. Additionally, or alternatively, the processor 712 may include one or more processors configured in tandem via a bus to enable independent execution of instructions, pipelining, and/or multithreading. The processor 712 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. The use of the term "processing circuitry" may be understood to include a single core processor, a multi-core processor, multiple processors internal to the apparatus, and/or remote or "cloud" processors. Accordingly, although illustrated in FIG. 7 as a single processor, in some embodiments, the processor 712 may include a plurality of processors. The plurality of processors may be embodied on a single computing device or may be distributed across a plurality of such devices collectively configured to function as the system 110. The plurality of processors may be in operative communication with each other and may be collectively configured to perform one or more functionalities of the system 110 as described herein.

In an example embodiment, the processor 712 may be configured to execute instructions stored in the memory 714 or otherwise accessible to the processor 712. Alternatively, or additionally, the processor 712 may be configured to execute hard-coded functionality. As such, whether configured by hardware or software methods, or by a combination thereof, the processor 712 may represent an entity (e.g., physically embodied in circuitry) capable of performing operations according to an embodiment of the disclosure while configured accordingly. Alternatively, as another example, when the processor 712 is embodied as an executor of software instructions, the instructions may specifically configure the processor 712 to perform one or more algorithms and/or operations described herein when the instructions are executed. For example, these instructions, when executed by the processor 712, may cause the system 110 to perform one or more of the functionalities thereof as described herein.

In some embodiments, the system 110 further includes input/output circuitry 716 that may, in turn, be in communication with the processor 712 to provide an audible, visual, mechanical, or other output and/or, in some embodiments, to receive an indication of an input from a user or another source. In that sense, the input/output circuitry 716 may include means for performing analog-to-digital and/or digital-to-analog data conversions. The input/output circuitry 716 may include support, for example, for a display, touchscreen, keyboard, mouse, image capturing device (e.g., a camera), microphone, and/or other input/output mechanisms. The input/output circuitry 716 may include a user interface and may include a web user interface, a mobile application, a kiosk, or the like.

The processor 712 and/or user interface circuitry comprising the processor 712 may be configured to control one or more functions of a display or one or more user interface elements through computer-program instructions (e.g., software and/or firmware) stored on a memory accessible to the processor 712 (e.g., the memory 714, and/or the like). In some embodiments, aspects of input/output circuitry 716 may be reduced as compared to embodiments where the system 110 may be implemented as an end-user machine or other type of device designed for complex user interactions. In some embodiments (like other components discussed herein), the input/output circuitry 716 may be eliminated from the system 110. The input/output circuitry 716 may be in communication with memory 714, communications circuitry 718, and/or any other component(s), such as via a bus. Although more than one input/output circuitry and/or other component can be included in the system 110, only one is shown in FIG. 7 to avoid overcomplicating the disclosure (e.g., as with the other components discussed herein).

The communications circuitry 718, in some embodiments, includes any means, such as a device or circuitry embodied in either hardware, software, firmware or a combination of hardware, software, and/or firmware, that is configured to receive and/or transmit data from/to a network and/or any other device, circuitry, or module associated therewith. In this regard, the communications circuitry 718 may include, for example, a network interface for enabling communications with a wired or wireless communication network. For example, in some embodiments, communications circuitry 718 may be configured to receive and/or transmit any data that may be stored by the memory 714 using any protocol that may be used for communications between computing devices. For example, the communications circuitry 718 may include one or more network interface cards, antennae, transmitters, receivers, buses, switches, routers, modems, and supporting hardware and/or software, and/or firmware/software, or any other device suitable for enabling communications via a network. Additionally, or alternatively, in some embodiments, the communications circuitry 718 may include circuitry for interacting with the antenna(s) to cause transmission of signals via the antenna(e) or to handle receipt of signals received via the antenna(e). These signals may be transmitted by the system 110 using any of a number of wireless personal area network (PAN) technologies, such as Bluetooth® v1.0 through v5.0, Bluetooth Low Energy (BLE), infrared wireless (e.g., IrDA), ultra-wideband (UWB), induction wireless transmission, or the like. In addition, it should be understood that these signals may be transmitted using Wi-Fi, Near Field Communications (NFC), Worldwide Interoperability for Microwave Access (WiMAX) or other proximity-based communications protocols. The communications circuitry 718 may additionally or alternatively be in communication with the memory 714, the input/output circuitry 716, and/or any other component of the system 110, such as via a bus. The communication circuitry 718 of the system 110 may also be configured to receive and transmit information with the various components associated therewith.

The resource allocation circuitry 720, in some embodiments, may be used to facilitate execution of the data distribution task. In this regard, the resource allocation circuitry 720 may receive information such as an aggregate count of hosts and data portions for a data distribution task. Upon receiving this input, the resource allocation circuitry 720 may configure various PODs for the data distribution task. As described herein, to execute an all-to-all communication pattern in the given network structure, every host in the network should communicate with every other host. To achieve this, the data communication process may be divided into stages. At each of these stages, the resource allocation circuitry 720 may identify at least one destination host for each source host without compromising link bandwidth for inter-POD communication so as to ensure consistent data flow throughout the network. Once identified, the resource allocation circuitry 720 may execute the data distribution task by transmitting respective data portions from each source host to the identified destination host. This iterative process progresses until every host has communicated respective data portions with every other host in the network.

In some other embodiments, the resource allocation circuitry 720 may optimize data communication by dynamically managing the configuration of the network structure and allocation of resources based on the requirements of the data distribution task. The resource allocation circuitry 720 may receive task parameters, including details such as the number of hosts, data portions, communication patterns, and performance constraints (e.g., bandwidth and latency requirements). Based on this input, the resource allocation circuitry 720 may determine an optimal arrangement of PODs and associated switches, accounting for factors such as the radix (k) of the switches and the connectivity demands of the task. The resource allocation circuitry 720 may configure the network structure dynamically, enabling modifications to switch connections, routing protocols, and bandwidth allocation to align with the specific communication requirements. To execute data distribution tasks, the resource allocation circuitry 720 may identify destination hosts for each source host at each stage of the communication process, leveraging methodologies that minimize communication hops while maintaining uniform data flow.

In some embodiments, the system 110 may include hardware, software, firmware, and/or a combination of such components, configured to support various aspects of resource allocation implementations as described herein. It should be appreciated that in some embodiments, the resource allocation circuitry 720 may perform one or more of such example actions in combination with another circuitry of the system 110, such as the memory 714, processor 712, input/output circuitry 716, and communications circuitry 718. For example, in some embodiments, the resource allocation circuitry 720 utilizes processing circuitry, such as the processor 712 and/or the like, to form a self-contained subsystem to perform one or more of its corresponding operations. In a further example, and in some embodiments, some or all of the functionality of the resource allocation circuitry 720 may be performed by the processor 712. In this regard, some or all of the example processes and algorithms discussed herein can be performed by at least one processor 712 and/or the resource allocation circuitry 720. It should also be appreciated that, in some embodiments, the resource allocation circuitry 720 may include a separate processor, specially configured field programmable gate array (FPGA), or application specific interface circuit (ASIC) to perform its corresponding functions.

Additionally, or alternatively, in some embodiments, the resource allocation circuitry 720 may use the memory 714 to store collected information. For example, in some implementations, the resource allocation circuitry 720 may include hardware, software, firmware, and/or a combination thereof, that interacts with the memory 714 to send, retrieve, update, and/or store data.

Accordingly, non-transitory computer readable storage media can be configured to store firmware, one or more application programs, and/or other software, which include instructions and/or other computer-readable program code portions that can be executed to direct operation of the system 110 to implement various operations, including the examples described herein. As such, a series of computer-readable program code portions may be embodied in one or more computer-program products and can be used, with a device, system 110, database, and/or other programmable apparatus, to produce the machine-implemented processes discussed herein. It is also noted that all or some of the information discussed herein can be based on data that is received, generated and/or maintained by one or more components of the system 110. In some embodiments, one or more external systems (such as a remote cloud computing and/or data storage system) may also be leveraged to provide at least some of the functionality discussed herein.

Example Inference and/or Training Logic for AI Workload

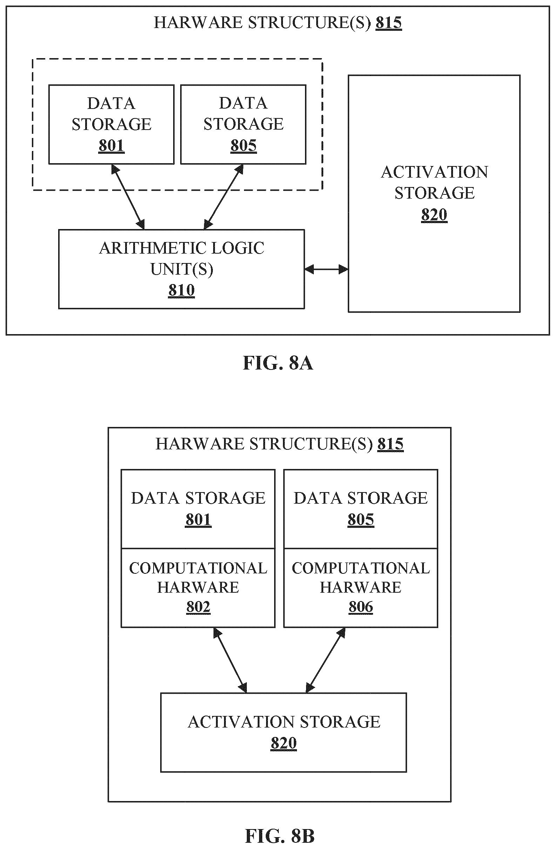

FIGS. 8A and 8B illustrate an example inference and/or training logic 800 used to perform inferencing and/or training operations associated with AI workloads, in accordance with an embodiment of the disclosure. Details regarding inference and/or training logic 800 are provided below in conjunction with FIGS. 8A and/or 8B.

In at least one embodiment, inference and/or training logic 800 may include, without limitation, code and/or data storage 801 to store forward and/or output weight and/or input/output data, and/or other parameters to configure neurons or layers of a neural network trained and/or used for inferencing in aspects of one or more embodiments. In at least one embodiment, training logic 800 may include, or be coupled to code and/or data storage 801 to store graph code or other software to control timing and/or order, in which weight and/or other parameter information is to be loaded to configure, logic, including integer and/or floating point units (collectively, arithmetic logic units (ALUs). In at least one embodiment, code, such as graph code, loads weight or other parameter information into processor ALUs based on an architecture of a neural network to which the code corresponds. In at least one embodiment, code and/or data storage 801 stores weight parameters and/or input/output data of each layer of a neural network trained or used in conjunction with one or more embodiments during forward propagation of input/output data and/or weight parameters during training and/or inferencing using aspects of one or more embodiments. In at least one embodiment, any portion of code and/or data storage 801 may be included with other on-chip or off-chip data storage, including a processor's L1, L2, or L3 cache or system memory.

In at least one embodiment, any portion of code and/or data storage 801 may be internal or external to one or more processors or other hardware logic devices or circuits. In at least one embodiment, code and/or code and/or data storage 801 may be cache memory, dynamic randomly addressable memory ("DRAM"), static randomly addressable memory ("SRAM"), non-volatile memory (e.g., Flash memory), or other storage. In at least one embodiment, choice of whether code and/or code and/or data storage 801 is internal or external to a processor, for example, or comprised of DRAM, SRAM, Flash or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 800 may include, without limitation, a code and/or data storage 805 to store backward and/or output weight and/or input/output data corresponding to neurons or layers of a neural network trained and/or used for inferencing in aspects of one or more embodiments. In at least one embodiment, code and/or data storage 805 stores weight parameters and/or input/output data of each layer of a neural network trained or used in conjunction with one or more embodiments during backward propagation of input/output data and/or weight parameters during training and/or inferencing using aspects of one or more embodiments. In at least one embodiment, training logic 800 may include, or be coupled to code and/or data storage 805 to store graph code or other software to control timing and/or order, in which weight and/or other parameter information is to be loaded to configure, logic, including integer and/or floating point units (collectively, arithmetic logic units (ALUs). In at least one embodiment, code, such as graph code, loads weight or other parameter information into processor ALUs based on an architecture of a neural network to which the code corresponds. In at least one embodiment, any portion of code and/or data storage 805 may be included with other on-chip or off-chip data storage, including a processor's L1, L2, or L3 cache or system memory. In at least one embodiment, any portion of code and/or data storage 805 may be internal or external to on one or more processors or other hardware logic devices or circuits. In at least one embodiment, code and/or data storage 805 may be cache memory, DRAM, SRAM, non-volatile memory (e.g., Flash memory), or other storage. In at least one embodiment, choice of whether code and/or data storage 805 is internal or external to a processor, for example, or comprised of DRAM, SRAM, Flash or some other storage type may depend on available storage on-chip versus off-chip, latency requirements of training and/or inferencing functions being performed, batch size of data used in inferencing and/or training of a neural network, or some combination of these factors.

In at least one embodiment, code and/or data storage 801 and code and/or data storage 805 may be separate storage structures. In at least one embodiment, code and/or data storage 801 and code and/or data storage 805 may be same storage structure. In at least one embodiment, code and/or data storage 801 and code and/or data storage 805 may be partially same storage structure and partially separate storage structures. In at least one embodiment, any portion of code and/or data storage 801 and code and/or data storage 805 may be included with other on-chip or off-chip data storage, including a processor's L1, L2, or L3 cache or system memory.

In at least one embodiment, inference and/or training logic 800 may include, without limitation, one or more arithmetic logic unit(s) ("ALU(s)") 810, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 820 that are functions of input/output and/or weight parameter data stored in code and/or data storage 801 and/or code and/or data storage 805. In at least one embodiment, activations stored in activation storage 820 are generated according to linear algebraic and or matrix-based mathematics performed by ALU(s) 810 in response to performing instructions or other code, wherein weight values stored in code and/or data storage 805 and/or code and/or data storage 801 are used as operands along with other values, such as bias values, gradient information, momentum values, or other parameters or hyperparameters, any or all of which may be stored in code and/or data storage 805 or code and/or data storage 801 or another storage on or off-chip.

In at least one embodiment, ALU(s) 810 are included within one or more processors or other hardware logic devices or circuits, whereas in another embodiment, ALU(s) 810 may be external to a processor or other hardware logic device or circuit that uses them (e.g., a co-processor). In at least one embodiment, ALUs 810 may be included within a processor's execution units or otherwise within a bank of ALUs accessible by a processor's execution units either within same processor or distributed between different processors of different types (e.g., central processing units, graphics processing units, fixed function units, etc.). In at least one embodiment, code and/or data storage 801, code and/or data storage 805, and activation storage 820 may be on same processor or other hardware logic device or circuit, whereas in another embodiment, they may be in different processors or other hardware logic devices or circuits, or some combination of same and different processors or other hardware logic devices or circuits. In at least one embodiment, any portion of activation storage 820 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

In at least one embodiment, activation storage 820 may be cache memory, DRAM, SRAM, non-volatile memory (e.g., Flash memory), or other storage. In at least one embodiment, activation storage 820 may be completely or partially within or external to one or more processors or other logical circuits. In at least one embodiment, choice of whether activation storage 820 is internal or external to a processor, for example, or comprised of DRAM, SRAM, Flash or some other storage type may depend on available storage on-chip versus off-chip, latency requirements of training and/or inferencing functions being performed, batch size of data used in inferencing and/or training of a neural network, or some combination of these factors. In at least one embodiment, inference and/or training logic 800 illustrated in FIG. 8A may be used in conjunction with an application-specific integrated circuit ("ASIC"), such as Tensorflow® Processing Unit from Google, an inference processing unit (IPU) from Graphcore™, or a Nervana® (e.g., "Lake Crest") processor from Intel Corp. In at least one embodiment, inference and/or training logic 800 illustrated in FIG. 8A may be used in conjunction with central processing unit ("CPU") hardware, graphics processing unit ("GPU") hardware or other hardware, such as field programmable gate arrays ("FPGAs").

Referring now to FIG. 8B, in at least one embodiment, inference and/or training logic 800 may include, without limitation, hardware logic in which computational resources are dedicated or otherwise exclusively used in conjunction with weight values or other information corresponding to one or more layers of neurons within a neural network. In at least one embodiment, inference and/or training logic 800 illustrated in FIG. 8B may be used in conjunction with an application-specific integrated circuit (ASIC), such as Tensorflow® Processing Unit from Google, an inference processing unit (IPU) from Graphcore™, or a Nervana® (e.g., "Lake Crest") processor from Intel Corp. In at least one embodiment, inference and/or training logic 800 illustrated in FIG. 8B may be used in conjunction with central processing unit (CPU) hardware, graphics processing unit (GPU) hardware or other hardware, such as field programmable gate arrays (FPGAs). In at least one embodiment, inference and/or training logic 800 includes, without limitation, code and/or data storage 801 and code and/or data storage 805, which may be used to store code (e.g., graph code), weight values and/or other information, including bias values, gradient information, momentum values, and/or other parameter or hyperparameter information. In at least one embodiment illustrated in FIG. 8B , each of code and/or data storage 801 and code and/or data storage 805 is associated with a dedicated computational resource, such as computational hardware 802 and computational hardware 806, respectively. In at least one embodiment, each of computational hardware 802 and computational hardware 806 comprises one or more ALUs that perform mathematical functions, such as linear algebraic functions, only on information stored in code and/or data storage 801 and code and/or data storage 805, respectively, result of which is stored in activation storage 820.

In at least one embodiment, each of code and/or data storage 801 and 805 and corresponding computational hardware 802 and 806, respectively, correspond to different layers of a neural network, such that resulting activation from one "storage/computational pair 801/802" of code and/or data storage 801 and computational hardware 802 is provided as an input to "storage/computational pair 805/806" of code and/or data storage 805 and computational hardware 806, in order to mirror conceptual organization of a neural network. In at least one embodiment, each of storage/computational pairs 801/802 and 805/806 may correspond to more than one neural network layer. In at least one embodiment, additional storage/computation pairs (not shown) subsequent to or in parallel with storage computation pairs 801/802 and 805/806 may be included in inference and/or training logic 800.

Example Generative AI Architecture for AI Workload

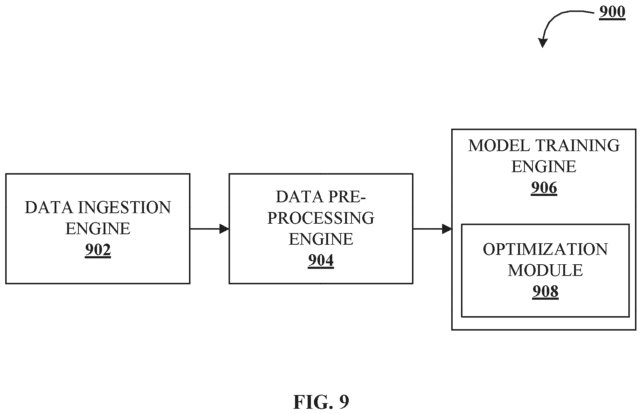

FIG. 9 illustrates an exemplary generative AI architecture 900, in accordance with an embodiment of the invention. The generative AI architecture 900 may include a data ingestion engine 902, a data pre-processing engine 904, and a model training engine 906. It should be understood that the generative AI architecture 900 is merely an example, and other embodiments may include more, fewer, or different components depending on the specific requirements and implementations of the system. For instance, additional engines for data validation, feature selection, or distributed computing may be integrated into the subsystem, or certain components described herein may be consolidated or omitted based on system performance objectives. Therefore, the generative AI architecture 900 should not be considered limiting and may be adapted to various configurations within the scope of the invention.

The data ingestion engine 902 may identify various internal and/or external data sources to generate, test, and/or integrate new features for training the generative AI model. These internal and/or external data sources (e.g., text corpora, web-based text data, document repositories, or decentralized text storage system) may be initial locations where the data originates or where physical information is first digitized. In addition to conventional data sources, the data ingestion engine 902 may support decentralized storage systems, such as blockchain-based data sources, and privacy-preserving methods such as differential privacy. The data ingestion engine 902 may identify the location of the data and describe connection characteristics for access and retrieval of data. In some embodiments, data is transported from each data source using any applicable network protocols, such as the File Transfer Protocol (FTP), Hyper-Text Transfer Protocol (HTTP), or any of the myriad Application Programming Interfaces (APIs) provided by websites, networked applications, and other services. In some embodiments, the data sources may include Enterprise Resource Planning (ERP) databases that host data related to day-to-day business activities such as accounting, procurement, project management, exposure management, supply chain operations, and/or the like, mainframes that are often the entity's central data processing center, edge devices that may be any piece of hardware, such as sensors, actuators, gadgets, appliances, or machines, that are programmed for certain applications and may transmit data over the internet or other networks, and/or the like.

Depending on the nature of the data, the data ingestion engine 902 may move the data to a destination for storage or further analysis. Typically, the data may be in varying formats as the data comes from different sources, including RDBMS, other types of databases, S3 buckets, CSVs, or from streams. For a large language model ("LLM"), text data may originate from sources such as web scrapes, social media, large public text datasets, or the like. Since the data may come from different places, the data needs to be cleansed and transformed so that the data may be analyzed together with data from other sources. The data may be ingested in real-time, using stream processing, in batches using a batch data warehouse, or in a combination of both. Stream processing may be used to process continuous data streams (e.g., data from edge devices) by computing on data directly as it is received, and filtering the incoming data to retain specific portions that are deemed useful by aggregating, analyzing, transforming, and/or ingesting the data. On the other hand, the batch data warehouse may collect and transfer data in batches according to scheduled intervals, triggered events, and/or any other logical ordering.

The generative AI architecture 900 may utilize one or more machine learning techniques to generate new content. In machine learning, the quality of data and the useful information that may be derived therefrom directly affects the ability of the machine learning model to learn. The data pre-processing engine 904 may implement advanced integration and processing steps needed to prepare the data for machine learning execution, including tokenization, text normalization, and/or removal of irrelevant elements like HTML tags in web-based data, especially for LLM training. This may include modules to perform any upfront data transformation to consolidate the data into alternate forms by changing the value, structure, and/or format of the data by using generalization, normalization, attribute selection, aggregation, and text-specific transformations such as stemming and lemmatization to data clean by filling missing values, smoothing the noisy data, resolving the inconsistency, removing outliers, and/or any other encoding steps as needed. In some embodiments, the data pre-processing engine 904 may perform real-time pre-processing at the edge via edge computing devices, allowing for the transformation and reduction of data prior to transmission to centralized locations, thereby reducing latency and conserving network bandwidth.

In addition to improving the quality of the data, the data pre-processing engine 904 may transform categorical data into numerical formats that may be suitable for machine learning algorithms. In this regard, the data pre-processing engine 904 may use techniques such as one-hot encoding or label encoding depending on the nature of the categorical variables and the intended use of the data.

In some embodiments, the data pre-processing engine 904 may also include dimensionality reduction techniques, where the number of input features is reduced while retaining the most relevant information. In this regard, the data pre-processing engine 904 may include methods such as Principal Component Analysis (PCA) or apply feature selection algorithms to remove redundant or irrelevant features, thereby reducing the computational complexity of the model training phase. Feature selection may be particularly beneficial in datasets with a high number of features, ensuring that the generative AI models do not overfit to noise or irrelevant details. The pre-processed data output from the data pre-processing engine 904 may then be fed into the model training engine 906.

The model training engine 906 may be responsible for training the generative AI models using the pre-processed data from the data pre-processing engine 904. The model training engine 906 may implement various machine learning algorithms, including but not limited to Generative Adversarial Networks (GANs), Variational Autoencoders (VAEs), transformers, diffusion models, and/or other specialized architectures depending on the specific requirements of the system. These models may be used in a broad range of applications, such as LLMs for text generation, image generation models, video synthesis models, audio generation models, and/or the like. The model training engine 906 may optimize these models by continuously adjusting their internal parameters based on the patterns and relationships identified within the data.

In some embodiments, the model training engine 906 may include a training data handler, which manages the partitioning of the pre-processed data into training, validation, and testing datasets. The training data may be used to update the model's parameters, while the validation and testing datasets may be reserved to evaluate the model's performance during and after training. The model training engine 906 may support various data-handling strategies, such as cross-validation or random shuffling, to ensure that the model generalizes well and is not overfitting to the training data.

In embodiments involving large language models, the model training engine 906 may utilize transformer-based architectures, such as the Transformer, BERT, GPT, or the like. Transformer models rely on mechanisms like self-attention to capture dependencies between words in a sequence, regardless of their distance from one another. The self-attention mechanism allows the model to weigh the importance of different words in a sentence and establish complex relationships important for understanding context. During training, the model may process vast amounts of text data and learn to predict the next word or token in a sequence based on the input context. This training process allows LLMs to generate coherent text, complete sentences, translate languages, or answer questions based on learned patterns from the data.

The transformer-based LLMs may be trained using autoregressive (e.g., GPT) or masked-language modeling techniques (e.g., BERT). In autoregressive models, the training process may include predicting the next word in a sequence by progressively revealing more context to the model. The model iteratively improves its predictions based on its performance during prior iterations. Masked-language modeling involves masking certain words in a sentence and training the model to correctly predict the masked words based on surrounding context. Both approaches enable LLMs to capture intricate patterns in human language, improving their ability to handle tasks such as summarization, translation, and text generation. Loss functions like cross-entropy loss may be used to optimize the model's performance by comparing predicted tokens with the actual tokens in the dataset to guide the model to minimize prediction errors during training, as described in further detail herein.

In embodiments involving image generation models, the model training engine 906 may utilize transformer-based architectures, such as Vision Transformers (ViTs) or generative adversarial networks (GANs). Vision Transformers rely on self-attention mechanisms to process images as sequences of patches rather than whole images, allowing the model to capture spatial dependencies and patterns across the image. During training, the model may be exposed to large datasets containing diverse image types to learn features like textures, edges, and shapes. The model may then generate or reconstruct images by interpreting these patterns and applying learned spatial relationships. GAN-based models may also be used, where a generator network creates images, and a determinator network evaluates their realism, enabling the model to improve through adversarial training.

Image generation models may employ various training techniques, such as pixel-wise reconstruction or adversarial training, depending on the architecture. Pixel-wise reconstruction methods involve learning to reconstruct an image from its corrupted or downscaled version, optimizing the model to minimize the difference between the predicted and actual pixels (e.g., using mean squared error as the loss function). Adversarial training, often used with GANs, involves iteratively improving the generator network to produce images that are increasingly indistinguishable from real images, based on feedback from the determinator network. These approaches allow the model to capture complex visual features, enabling applications such as image synthesis, enhancement, and style transfer.

For video generation models, the model training engine 906 may employ transformer-based architectures like Video Transformers or GAN-based models specifically designed for handling temporal sequences. Video Transformers use self-attention mechanisms to model dependencies not only between pixels within a single frame but also across frames, allowing them to understand temporal relationships and motion patterns in videos. The model may be trained on large video datasets, enabling it to learn and reproduce dynamic changes and interactions between objects over time. GAN-based video models may incorporate spatiotemporal networks to evaluate the realism of generated video sequences, optimizing the model to produce continuous and coherent frames.

Video generation models may utilize spatial-temporal modeling techniques or adversarial training for generating realistic motion and video sequences. Spatial-temporal modeling involves learning the spatial features within each frame while simultaneously capturing the temporal dependencies between frames, optimizing the model's ability to predict future frames or complete missing sequences. Loss functions like mean squared error or perceptual loss may be applied to reduce discrepancies between predicted and actual frames. Adversarial training, on the other hand, may involve a generator creating video sequences and a determinator evaluating their realism, encouraging the generator to improve by minimizing the discrepancy identified by the determinator. These techniques may enable video generation models to create coherent and realistic sequences, useful in applications such as video synthesis and animation.

In audio generation models, the model training engine 906 may utilize architectures such as Audio Transformers or recurrent neural networks (RNNs) like WaveNet, designed to handle sequential and waveform data. Audio Transformers leverage attention mechanisms to capture relationships between segments of audio, allowing them to model temporal dependencies and predict the next audio sample based on previous context. During training, the model may process large audio datasets containing diverse sound patterns to learn representations of different audio features, such as frequency, amplitude, and harmonics. This training enables the model to generate coherent audio sequences, including speech, music, or ambient sounds, by synthesizing these learned patterns.

Audio generation models may be trained using sequence modeling techniques or autoregressive methods, depending on the architecture. Sequence modeling techniques involve processing and predicting sequences of audio samples, optimizing the model to capture and reproduce temporal dependencies in sound. Autoregressive methods, such as those employed in WaveNet, focus on predicting each audio sample based on prior samples, progressively refining the generated audio sequence over multiple iterations. Loss functions like mean absolute error or cross-entropy loss may be used to minimize the error between predicted and actual audio samples, guiding the model to improve its accuracy. These approaches allow audio generation models to create continuous and realistic audio outputs, applicable in areas such as speech synthesis, music generation, and sound effect creation.

The reconstruction loss ensures that the difference between the original input and the reconstructed output is minimized, guiding the decoder to generate outputs that closely resemble the input data. The second component, KL divergence loss, regularizes the latent space by ensuring that the distribution of latent variables conforms to a predefined probabilistic distribution, often a Gaussian distribution. This constraint encourages the model to learn a well-organized and smooth latent space, allowing for meaningful sampling from this space during inference. By combining these loss functions, the VAE can learn a latent space that not only captures the underlying patterns in the data but also allows for the generation of novel outputs by sampling new points from this space. During the inference phase, the trained model can sample random points from the latent space to generate new, previously unseen data instances.

In training generative AI models, the model training engine 906, which includes an optimization module 908, may implement various optimization techniques to improve model performance and efficiency. The optimization module 908 is responsible for adjusting the model's internal parameters continuously, using feedback from relevant loss functions tailored to the application (e.g., text, image, audio, or video generation). Techniques such as gradient clipping, learning rate scheduling, and mixed-precision training are applied by the optimization module 908 to stabilize and fine-tune the training process. Gradient clipping may be used to stabilize the training process, especially in transformer-based models, by capping the magnitude of gradients to prevent them from becoming excessively large. Learning rate scheduling may involve gradually increasing the learning rate during initial training phases (warm-up) and then decaying it as training progresses to fine-tune the model's parameters more effectively. Mixed-precision training, which leverages lower-precision (e.g., float16) arithmetic while retaining higher precision (e.g., float32) for specific calculations, may be used to accelerate training and reduce memory consumption, enabling the model to scale efficiently even when trained on large datasets.

In some embodiments, the model training engine 906 may implement early stopping mechanisms to prevent overfitting. Early stopping monitors the generative AI model's performance on the validation dataset, halting the training process if the performance does not improve after a specified number of iterations. This ensures that the generative AI model does not continue training on noise or irrelevant patterns, which could degrade its performance on unseen data. The model training engine 906 may also support distributed training across multiple computing nodes, allowing the system to scale its computational resources as needed. Distributed training may involve splitting the generative AI model and data across multiple machines or GPUs, where each node processes a portion of the data and updates the model in parallel. This is particularly useful for large datasets or models that require significant computational power, such as deep generative models. The model training engine 906 may synchronize the updates across the nodes using techniques like synchronous or asynchronous gradient descent.

Once the generative AI model is trained, the model training engine 906 may save the final trained generative AI model in a persistent storage location for future use. In specific embodiments, metadata such as the number of epochs, the final loss values, and values of learned parameters may be logged for model versioning and/or retraining at a later stage. In some embodiments, the model training engine 906 may also implement transfer learning, where a pre-trained model is fine-tuned on a smaller, domain-specific dataset. This may reduce the amount of time and data required to train a new model, especially in cases where the available data is limited or highly specialized. The model training engine 906 may adjust the parameters of the pre-trained model to better align with the new dataset, while preserving the learned features from the original training.

In embodiments involving LLMs, new output is generated by sampling from the model's probability distribution of tokens, conditioned on the context provided as input. Transformer-based architectures, such as GPT, use an auto-regressive approach where the model predicts the next token in a sequence one step at a time, using previously generated tokens as input for subsequent predictions. The process starts with a prompt or an initial sequence of words, and the model iteratively generates new tokens, forming coherent sentences or paragraphs based on the learned context and language patterns. For masked-language modeling (e.g., BERT), new output may be generated by filling in masked parts of the input sequence, allowing the model to complete sentences or generate variations of the provided text. The generated output can be controlled by adjusting parameters such as temperature, which influences the randomness of the token sampling, enabling the generation of diverse or deterministic responses.

In image generation models, such as those using ViTs or GANs, new output is generated by sampling from the learned distribution in the model's latent space. For GANs, the generator network creates an image by transforming random noise vectors into structured image outputs through a series of layers that learn visual features like shapes, textures, and colors. The generated image is then refined through adversarial feedback from the determinator network, which assesses the realism of the generated output. For transformer-based image models, the process may involve reconstructing images by assembling patches based on the learned dependencies between them. Input conditions, such as prompts describing desired features or specific noise vectors, guide the generation process, allowing for the creation of customized images or variations of existing visual styles. These models may also generate images based on style transfer techniques or predefined templates, synthesizing images that align with the characteristics present in the training data.

Video generation models utilize spatiotemporal dependencies to synthesize new video sequences based on the patterns learned during training. In transformer-based architectures, the model may generate video frames sequentially, predicting the next frame based on the input frames and the temporal context established by prior frames. GAN-based models, specifically designed for video synthesis, may sample noise vectors or use a sequence of frames as input, transforming these into continuous and temporally coherent video outputs through the generator network. The determinator evaluates the temporal consistency and realism of the output, ensuring the generated video mimics the motion dynamics and object interactions present in real-world video data. Such models may also use attention mechanisms to focus on critical elements within each frame and their evolution across time, facilitating realistic scene transitions and motion patterns. The generation process may include user-defined input such as initial frames, motion descriptions, or specific video attributes, providing control over the output.

Audio generation models, including Audio Transformers or autoregressive architectures like WaveNet, generate new audio sequences by predicting audio samples based on learned dependencies in sequential sound data. For autoregressive models, the generation process involves producing each audio sample one at a time, conditioned on previously generated samples, allowing the model to build complex audio patterns such as speech, music, or ambient sounds. The model starts with an initial segment or a random seed and uses its learned parameters to predict and synthesize subsequent samples, constructing a continuous audio waveform. Audio Transformers, on the other hand, may use attention mechanisms to identify important temporal segments within the input audio and synthesize new output based on these learned patterns. The user can control the type of audio generated by providing parameters such as pitch, tempo, or initial sound clips, enabling the model to generate outputs tailored to specific use cases like speech synthesis, music composition, or environmental sound generation.

In some embodiments, generative AI models may also integrate multiple modalities, enabling cross-modal generation where output in one modality influences or conditions the generation in another. For example, a video generation model may use text descriptions as input, synthesizing video content that aligns with the specified narrative or visual scene described. Similarly, image generation models may generate visual representations based on audio inputs, such as generating animations synchronized to musical rhythms or speech patterns. These cross-modal systems typically involve conditional GANs or multi-modal transformers, where the model processes input from one domain (e.g., text or audio) and learns to generate output in another domain (e.g., video or image) by aligning the patterns and dependencies between the different modalities. These models may allow users to generate complex, multimodal content based on combinations of inputs, such as using textual prompts to control the visual and auditory elements of a video.

It will be understood that the embodiment of the generative AI architecture 900 illustrated in FIG. 9 is exemplary and that other embodiments may vary. The generative AI architecture 900, as well as its constituent elements, may vary, and modifications or alternative configurations may be implemented without departing from the broader scope of the invention. For instance, different machine learning algorithms, data sources, optimization techniques, or training methodologies may be employed depending on system requirements, application domain, and available computational resources. Furthermore, features and functionalities described in one embodiment may be combined with those of another embodiment as needed, and vice versa.

Example Methods for Allocation of Network Resources

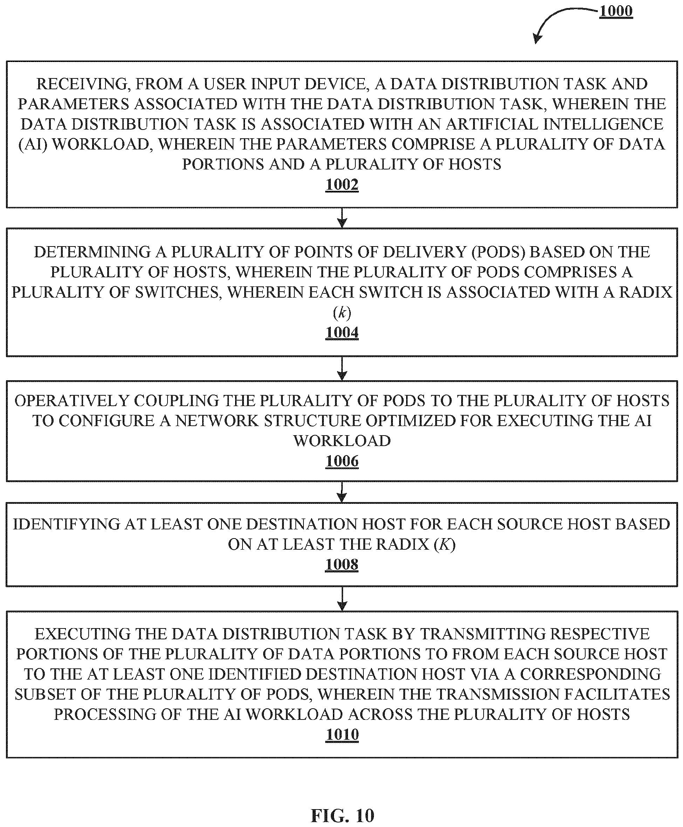

FIG. 10 illustrates an example method 1000 for efficient allocation of network resources for optimized data communication, in accordance with an embodiment of the disclosure. As shown in block 1002, the method may include receiving, from a user input device, a data distribution task and parameters associated with the data distribution task, wherein the data distribution task is associated with an artificial intelligence (AI) workload, wherein the parameters comprise a plurality of data portions and a plurality of hosts. As used herein, an AI workload may refer to a computational task involving the processing of large datasets, training of machine learning models, or execution of inference operations. The AI workload may include operations such as matrix multiplications, data transformations, neural network computations, or the like, which require significant computational and memory resources.

In some embodiments, the parameters associated with the execution of the data distribution task may define the scope and nature of the task. For instance, the parameters of the data distribution task may include a plurality of data portions and a plurality of hosts among whom the data portions are to be distributed. These parameters could further specify the size and format of each data portion, the network addresses or identifiers of the hosts, and the intended communication pattern. Additionally, the parameters may include network bandwidth limits, latency requirements, prioritization of data transfers, and any specific routing protocols or algorithms to be employed.

A communication pattern, in the context of distributed computing and parallel processing, may refer to a set of communication operations that involve a group of processes or nodes (e.g., hosts) within a network. Communication patterns apply when managing the data flow between different nodes involved in a computation, especially in environments such as high-performance computing clusters, grid computing, and various forms of parallel processing systems. As such, communication patterns may be involved in data distribution tasks where data is to be distributed across or aggregated from multiple nodes. Examples of communication patterns may include all-to-all, broadcast, scatter-gather, reduction operations, and/or the like.

As shown in block 1004, the method may include determining a plurality of points of delivery (PODs) based on the plurality of hosts, wherein the plurality of PODs comprises a plurality of switches, wherein each switch is associated with a radix (k). As described herein, a POD may refer to a basic unit of network segment made up of one or more switches (e.g., leaf switch, spine switch, and/or the like) and, in some cases, other network components (e.g., routers, cables, and/or the like) that together provide network services to the hosts. In some embodiments, the plurality of switches may include a plurality of electrical switches or a plurality of optical switches. In one aspect, the plurality of electrical switches may include a plurality of leaf switches, a plurality of spine switches, a plurality of core switches, and/or the like. Each switch may be associated with a radix (k), which may refer to the number of ports on the switch. Said differently, the radix (k) may determine the connectivity capacity of the switch.

Given the radix (k) of a switch, the number of hosts that can be connected to each switch may be determined. In some example embodiments, if each host requires one port to connect to the switch, and assuming that each port of the switch is used to connect to a host (rather than inter-switch connections or uplinks), then each switch can support *k* hosts. For example, if *k*=4, then each switch may support 4 hosts. As described herein, the hosts may be evenly and symmetrically distributed across the available PODs. As such, the total number of PODs may be determined based on the total number of hosts and the number of hosts that each POD can support. For example, if there are 16 hosts, and each POD can support 4 hosts, then there are a total of 4 PODs. As described herein, each POD may include one or more switches, depending on the architecture. In embodiments where each POD has two leaf switches and two spine switches interconnecting the two leaf switches, as shown in FIG. 5A, then the hosts may be distributed in such a way that each leaf switch in a POD may have 2 hosts operatively coupled thereto. In embodiments where each POD may include a single leaf switch, as shown in FIG. 5B, then the hosts may be distributed in such a way that the leaf switch may have 4 hosts operatively coupled thereto.

In some embodiments, the PODs may be interconnected via communication links, where each POD may be operatively coupled to every other POD via individual links. In other words, the individual links may be distributed uniformly so that each POD is connected to every other POD via a single link. Each of these links may be associated with a specific bandwidth, B. Consequently, the PODs interface with optical switches to facilitate inter-POD communication.

As shown in block 1006, the method may include operatively coupling the plurality of PODs to the plurality of hosts to configure a network structure optimized for executing the AI workload. In specific embodiments, the network structure may be configured by arranging the plurality of PODs and hosts in a mesh topology. A mesh topology may provide direct or multi-hop connections between PODs, enabling scalable and flexible communication pathways. Such a configuration may allow for robust connectivity, as each host or POD may be connected to multiple others, reducing the risk of communication bottlenecks. By employing a mesh topology, the method may optimize data flow, particularly in scenarios where high bandwidth and low latency are critical, such as in AI and machine learning tasks. The arrangement may be dynamically adaptable, allowing the network structure to reconfigure in response to changing task requirements, host availability, or data distribution patterns. In example embodiments, for each host in the network, there may be a corresponding link that connects the host to an optical switch, such that each host may have a designated path to the optical switch.

As shown in block 1008, the method may include identifying at least one destination host for each source host based on at least the radix (k). As described herein, the data communication process may be divided into stages, such that every host in the network may communicate with every other host. In specific embodiments, the number of data distribution stages may depend on an aggregate count of the number of hosts involved in the data distribution task. For instance, if the aggregate count of the hosts is 16, then the number of data distribution stages is 16. In instances in which the initial stage where the hosts transmit data to themselves is not implemented, the number of data distribution stages is 15. With 16 hosts and 4 PODs, each of the 4 PODs may have an equal distribution of hosts, with each POD facilitating connections to 4 distinct hosts. In this example, and with reference to FIG. 4, hosts H0, H1, H2, and H3 may connect to P1, while hosts H4, H5, H6, and H7 may connect to P2, and so forth.

Data communication at each stage is traditionally governed by $j = (i + s) \bmod N$. In this equation, *i* is the source host, *j* is the destination host, *s* is the stage, and *N* is the total number of hosts. In the example network described herein, the total number of hosts, *N*, is equal to 16. According to the given equation, at Stage 0, hosts primarily exchange data within themselves. For instance, H0 communicates with itself, as does H1 and subsequent hosts. Moving to Stage 1, each host forwards data to the next host in line: H0 to H1, H1 to H2, H2 to H3, and so on, continuing in this pattern. This stage also brings forth inter-POD communications, such as H3 from P1 transferring data to H4 under P2. Similarly, H7 from P2 communicates with H8 under P3, and H11 from P3 sends data to H12 under P4. In Stage 2, every host transmits data to another host two positions ahead: H0 to H2, H1 to H3, and so on. In conventional systems, this exchange can potentially introduce complications. For example, both H2 and H3 under P1 might try to communicate with H4 and H5 under P2, respectively. As the stages progress, the farther apart hosts are in communication, and the greater the chance is for several hosts under one leaf switch to send data simultaneously to hosts under another switch at any given time, thus dividing the available bandwidth for communication. Such simultaneous data transfer can lead to network congestion and reduced communication speed.

To address the challenges posed by the permutation sequence described above, for each data distribution stage, the method may identify a destination host (j) for each source host (i) based on at least a distribution of hosts ($H_x$) within each POD, and the radix (k) of each switch. In particular, the destination host (j) may be identified based on $j = (((i + s) \bmod$

$$H_x) * k) + \left\lfloor \frac{i}{H_x} \right\rfloor + \left\lfloor \frac{s}{H_x} \right\rfloor$$. Here, *x* may identify the specific POD, *Hx* may indicate the distribution of hosts under a particular POD, *x*. In example embodiments where the POD may include a layer of leaf switches and a layer of spine switches, Hx may be equal to the number of hosts that are connected to the leaf switches within that POD. In a maximal POD

$$Hx = \frac{k^2}{4}$$

configuration, , with *k* being the radix of the switches. In example embodiments where the POD only includes a layer of leaf switches (e.g., POD=leaf switch), then Hx may be equal to the number of hosts to which each leaf switch may directly connect. If the leaf switch uses half of its ports for connections to hosts and the other half for connections to the

$$Hx = \frac{k}{2}$$

optical switches, then .

As shown in block 1010, the method may include executing the data distribution task by transmitting respective portions of the plurality of data portions to from each source host to the at least one identified destination host via a corresponding subset of the plurality of PODs, wherein the transmission facilitates processing of the AI workload across the plurality of hosts. In specific embodiments, the data distribution task may be executed by transmitting the plurality of data portions according to an all-to-all communication pattern. As described herein, an all-to-all communication pattern may involve every host in the network transmitting data portions to every other host in a series of stages. At each stage, data may be transmitted simultaneously from multiple source hosts to corresponding destination hosts, ensuring comprehensive data exchange across the network. The all-to-all communication pattern may be particularly relevant for tasks requiring distributed processing, such as AI workloads, where intermediate results generated by one host must be shared with other hosts to continue processing. The all-to-all pattern may be implemented by dividing the communication process into multiple stages, with the source and destination hosts for each stage determined based on specific equations or algorithms designed to optimize resource utilization and minimize latency.

In some embodiments, the method may transmit the plurality of data portions in a sequence of data distribution stages based on the required number of data distribution stages. For each stage, upon identifying a destination host (*j*), the method may transmit a first data portion from the source host (*i*) to the identified destination host (*j*) via the corresponding subset of the plurality of PODs using a bandwidth, *B*, of corresponding communication links. This arrangement facilitates concurrent inter-POD communication utilizing the complete bandwidth, *B*, of each link. Such a setup allows for simultaneous data transmission where a single source host in one POD sends data portions to a single destination host in a different POD at every stage, thereby optimizing bandwidth usage without overlap or congestion.

In some embodiments, at each data distribution stage (*s*), each source host may transmit respective data portions to a corresponding destination host simultaneously. The number of destination hosts for each source host (i) may be determined based on a window size, *W*. For instance, for a window size *W*=1, at each stage a particular source host may communicate with exactly one destination host with a bandwidth, B, that is equal to the bandwidth, *B*, of the link connecting the source host with the destination host. However, there may be instances in which, during a stage, a source host may need to transmit data to two or more distinct destination hosts simultaneously. To manage these multiple destinations, for window size *W*>1, the method may execute the data distribution task in a clustered grouping of data distribution stages, where the size of the clustered grouping is based on at least the window size, *W*. Here, in each clustered grouping of data stages, the method may transmit data portions from the source host (*i*) to the identified at least one destination host using a portion of the bandwidth, *B*, of corresponding communication links. In example embodiments, the portion of the available bandwidth, *B*, may be determined based on at least the window size, *W*. For example, if *W*=2, then two stages can be grouped together for simultaneous data communication from a source host to two distinct destinations, with each data communication utilizing half of the available bandwidth of the link.

To execute the data distribution task in the sequence of data distribution stages, the method may iteratively determine the destination host (*j*) for each source host (*i*) at each data distribution stage (*s*) for the required number of data distribution stages. At each iteration, the method may transmit data portions from the plurality of data portions from the source host (*i*) to the determined destination host (*j*).

As described herein, the hosts may be evenly and symmetrically distributed across the available PODs. For instance, if there are a total of 4 PODs (e.g., P1, P2, P3, P4) as shown in FIG. 4, and a total of 16 hosts, each of the 4 PODs will have an equal distribution of hosts, with each POD facilitating connections to 4 distinct hosts. In some embodiments, the hosts may not be symmetrically distributed across the available PODs. In such cases, the method may integrate virtual hosts in the network structure to balance the asymmetric distribution hosts under each POD to create a symmetric distribution. In response, the method may execute the data distribution task as detailed herein. During transfer of data portions, if a virtual host is designated as a destination host, no actual data will be sent to the virtual host.

FIG. 10 thus illustrates flowcharts describing the operation of apparatuses, methods, and computer program products according to example embodiments contemplated herein. It will be understood that each flowchart block, and combinations of flowchart blocks, may be implemented by various means, such as hardware, firmware, processor, circuitry, and/or other devices associated with execution of software including one or more computer program instructions. For example, one or more of the operations described above may be implemented by an apparatus executing computer program instructions. In this regard, as described in connection with FIG. 7 above, the computer program instructions may be stored by a memory 714 of the system 110 and executed by a processor 712 of the system 110. As will be appreciated, any such computer program instructions may be loaded onto a computer or other programmable apparatus (e.g.,

hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture, the execution of which implements the functions specified in the flowchart blocks. The computer program instructions may also be loaded onto a computer or other programmable apparatus to cause a series of operations to be performed on the computer or other programmable apparatus to produce a computer-implemented process such that the instructions executed on the computer or other programmable apparatus provide operations for implementing the functions specified in the flowchart blocks.

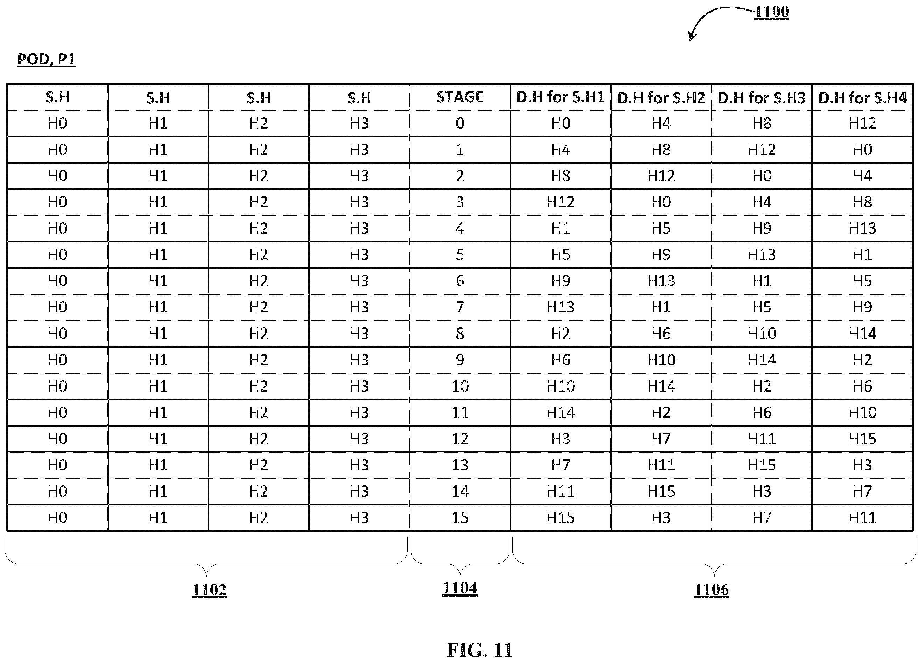

FIG. 11 illustrates an equation outcome table 1100 for optimized data communication in POD P1 (e.g., P1 shown in FIGS. 4, 5A, and 5B), in accordance with an embodiment of the invention. As shown in FIG. 11, the equation outcome table 1100 may be presented as a structured data representation comprising nine columns. Each of the first four columns 1102 may represent a source host ($i$) (e.g., H0, H1, H2, or H3) in P1. The fifth column 1104 may represent the stages ($s$) of iterative progression of the equation used to determine the destination host ($j$) progresses. The last four columns 1106 may represent destination hosts ($j$) for corresponding source hosts ($i$) represented in the first four columns 1102. For example, the sixth column may represent destination hosts for source host H0, the seventh column may represent destination hosts for source host H1, the eighth column may represent destination hosts for source host H2, and the ninth column may represent destination hosts for source host H3.

As described herein, for each data distribution stage ($s$), a destination host ($j$) may be identified for each source host ($i$) based on $j = \left(\left((i + s) \bmod H_x\right) * k\right) + \left\lfloor \frac{i}{H_x} \right\rfloor + \left\lfloor \frac{s}{H_x} \right\rfloor$. For the example network structure described in FIGS. 1 and 5A, $k=4$ and $Hx=4$. To execute an all-to-all communication pattern in the example network structure described in FIGS. 1 and 5A, every host in the network should communicate with every other host. Such communication may include both intra-POD communication and inter-POD communication. At each stage, each source host may transmit respective data portions to a corresponding destination host simultaneously. As shown in FIG. 11, in the first iteration, e.g., at Stage 0, according to embodiments of the invention, source host H0 transmits data portions to corresponding destination host H0, source host H1 transmits data portions to corresponding destination host H4, source host H2 transmits data portions to corresponding destination host H8, and source host H3 transmits data portions to corresponding destination host H12 simultaneously. In the second iteration, e.g., at Stage 1, source host H0 transmits data portions to corresponding destination host H4, source host H1 transmits data portions to corresponding destination host H8, source host H2 transmits data portions to corresponding destination host H12, and source host H3 transmits data portions to corresponding destination host H0 simultaneously. As the iterative process progresses through each stage, each source host in P1 transmits data portions to a corresponding destination host operatively coupled to a different POD. According to embodiments of the invention, this inter-POD communication is optimized in such a way that at each stage of data portion transmission, no two destination hosts are operatively coupled to the same POD. For example, at Stage 1, source host H0 transmits respective data portions to corresponding destination host H4 in P2, source host H1 transmits respective data portions to corresponding destination host H8 in P3, source host H2 transmits respective data portions to corresponding destination host H12 in P4 simultaneously. This arrangement facilitates concurrent inter-POD communication among P1 and P2, P1 and P3, as well as P1 and P4, through their respective communication links. Utilizing the complete bandwidth, B, of each link, the setup according to embodiment of the invention described herein allows for simultaneous data transmission where a single source host in one POD sends data portions to a single destination host in a different POD at every stage, thereby optimizing bandwidth usage without overlap or congestion.

Example Method for Optimized Data Communication

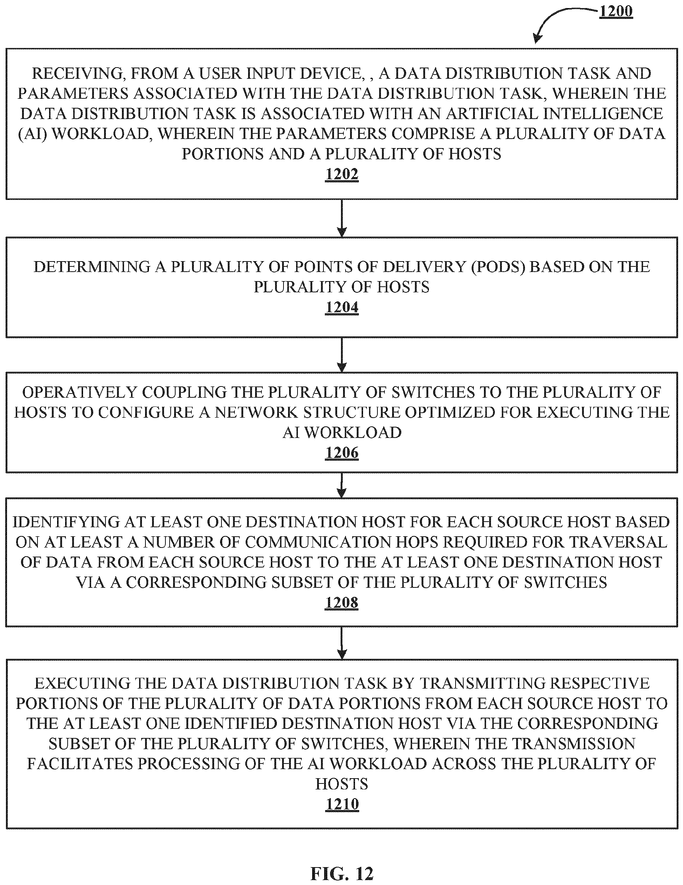

FIG. 12 illustrates an example method 1000 for optimized data communication, in accordance with an embodiment of the disclosure. As shown in block 1202, the method may include receiving, from a user input device, a data distribution task and parameters associated with the data distribution task, wherein the data distribution task is associated with an artificial intelligence (AI) workload, wherein the parameters comprise a plurality of data portions and a plurality of hosts. As described herein, an AI workload may refer to a computational task involving the processing of large datasets, training of machine learning models, or execution of inference operations. The workload may include operations such as matrix multiplications, data transformations, or neural network computations, which require significant computational and memory resources. In some embodiments, the parameters associated with the execution of the data distribution task may define the scope and nature of the task. For instance, the parameters of the data distribution task may include a plurality of data portions and a plurality of hosts to which the data portions are to be distributed. These parameters could further specify the size and format of each data portion, the network addresses or identifiers of the hosts, and the intended communication pattern. Additionally, the parameters may include network bandwidth limits, latency requirements, prioritization of data transfers, and any specific routing protocols or algorithms to be employed.

As shown in block 1204, the method may include determining a plurality of points of delivery (PODs) based on the plurality of hosts. As described herein, a POD may refer to a basic unit of network segment made up of one or more switches (e.g., leaf switch, spine switch, and/or the like) and, in some cases, other network components (e.g., routers, cables, and/or the like), that together provide network services to the hosts. In some embodiments, the plurality of switches may include a plurality of electrical switches, such as leaf switches, spine switches, and/or the like. Each switch may be associated with a radix ($k$), which may refer to the number of ports on the switch. Said differently, the radix ($k$) may determine the connectivity capacity of the switch.

Given the radix ($k$) of a switch, the number of hosts that can be connected to each switch may be determined. In some example embodiments, if each host requires one port to connect to the switch, and assuming that each port of the switch is used to connect to a host (rather than inter-switch connections or uplinks), then each switch can support $k/2$ hosts. For example, if $k=4$, then each switch may support 2 hosts. As described herein, the hosts may be evenly and symmetrically distributed across the available PODs. As such, the total number of PODs may be determined based on the total number of hosts and the number of hosts that each POD can support. For example, if there are 16 hosts, and each POD can support 4 hosts, then there is a total of 4 PODs. As described herein, each POD may include one or more switches, depending on the architecture. In example embodiments where each POD has two leaf switches and two spine switches interconnecting the two leaf switches, as shown in FIG. 1, the hosts may be distributed in such a way that each leaf switch in a POD may have 2 hosts operatively coupled thereto.

As shown in block 1206, the method may include operatively coupling the plurality of switches to the plurality of hosts to configure a network structure optimized for executing the AI workload. In specific embodiments, the network structure may be configured by arranging the plurality of PODs and hosts in a mesh topology to facilitate data transmission. As described herein, a mesh topology may provide direct or multi-hop connections between PODs, enabling scalable and flexible communication pathways. Such a configuration may ensure robust connectivity, as each host or POD may be connected to multiple others, reducing the risk of communication bottlenecks. By employing a mesh topology, the method may optimize data flow, particularly in scenarios where high bandwidth and low latency are critical, such as in AI and machine learning tasks. The arrangement may be dynamically adaptable, allowing the network structure to reconfigure in response to changing task requirements, host availability, or data distribution patterns.

In some embodiments, the network structure may be dynamically configured. In one aspect, dynamic configuration may refer to the ability of the network to reconfigure its structure and resource allocation in response to changing data distribution task requirements. The dynamic nature of this configuration allows for the tear-down and reconfiguration of the network's structure, aligning it with specific operational demands. For instance, depending on the task requirements, the network may switch from a topology optimized for high-volume data transfer to one focused on low-latency communication. In example embodiments, dynamic reconfiguration may involve altering the connections between leaf, spine, and/or core switches, as well as modifying the routing protocols and bandwidth allocation. For example, a network initially configured to support high-compute tasks may be reconfigured to prioritize storage or network-intensive workloads, based on the changing requirements of the hosts connected thereto.

As shown in block 1208, the method may include identifying at least one destination host for each source host based on at least a number of communication hops required for traversal of data from each source host to the at least one destination host via a corresponding subset of the plurality of switches. In specific embodiments, the number of data distribution stages may depend on an aggregate count of the number of hosts involved in the data distribution task. For instance, if the aggregate count of the hosts is 16, then the number of data distribution stages is 16. In instances in which the initial stage where the hosts transmit data to themselves is not implemented, the number of data distribution stages is 15. With 16 hosts and 4 PODs, each of the 4 PODs may have an equal distribution of hosts, with each POD facilitating connections to 4 distinct hosts. In this example, and with reference to FIG. 1, hosts H0, H1, H2, and H3 may connect to P1, while hosts H4, H5, H6, and H7 may connect to P2, and so forth.

Data communication at each stage is traditionally governed by $j = (i + s)\ mod\ N.$ In this equation, $i$ is the source host, $j$ is the destination host, $s$ is the stage, and $N$ is the total number of hosts. In the example network described herein, the total number of hosts $N$ is equal to 16. According to the given equation, at Stage 0, hosts primarily exchange data within themselves. For instance, H0 communicates with itself, as does H1 and subsequent hosts. Moving to Stage 1, each host forwards data to the next host in line: H0 to H1, H1 to H2, H2 to H3, and so on, continuing in this pattern. This stage brings forth inter-switch communication, such as when H1 under L1.1 transmits data to H2 under L1.2, H5 under L2.1 transmits data to H6 under L2.2, and so on. Stage 1 also bring forth inter-POD communications, such as H3 under L1.2 in P1 transmitting data to H4 under L2.1 in P2, H7 under L2.2 in P2 transmitting data to H8 under L3.1 in P3, and so on. Here, the number of communication hops required for inter-switch communication and the number of communication hops required for inter-POD communication are unequal as between the different source hosts. Communication hops may refer to a single step (e.g., switch) in the data transmission process between two hosts. For example, when H1 under L1.1 transmits data to H2 under L1.2, the number of communication hops is 3, as the data has to traverse from L1.1, S1.1, and then to L2.1 to reach H2. On the other hand, when H3 under L1.2 transmits data to H4 under L2.1, the number of communication hops is 5, as the data from H3 has to traverse through L1.2, S1.2, C0, S2.1, and L2.1 to reach H4. In Stage 2, every host transmits data to another two positions ahead: H0 to H2, H1 to H3, and so on. Similarly, in Stage 2, the number of communication hops required for inter-switch communication and the number of communication hops required for inter-POD communication are unequal. For example, when H1 under L1.1 transmits data to H3 under L1.2, the number of communication hops is 3, as the data has to traverse from L1.1, S1.1, and then to L2.1 to reach H3. On the other hand, when H2 under L1.2 transmits data to H4 under L2.1, the number of communication hops is 5, as the data from H2 has to traverse through L1.2, S1.2, C0, S2.1, and L2.1 to reach H5. As we progress through the stages, the distance between communicating hosts becomes greater, and the path that the data communication must travel through the network hierarchy becomes more convoluted, as the number of hops required for each communication increases.

To address the challenges posed by the permutation sequence described above, for each data distribution stage, embodiments of the method may identify a destination host ($j$) for each source host ($i$) based on a number of communication hops required for traversal of data from the source host ($i$) to the destination host ($j$) via corresponding switches. In particular, the destination host ($j$) may be identified based on

$$j = \left(i + s \bmod \frac{k}{2}\right) + \left(\left(\frac{k}{2} * \left\lfloor \frac{i}{\frac{k}{2}} \right\rfloor + \frac{k}{2} * \left\lfloor \frac{s}{\frac{k}{2}} \right\rfloor\right) \bmod \frac{k^2}{4}\right) + \left(\left(\frac{k^2}{4} * \left\lfloor \frac{i}{\frac{k^2}{4}} \right\rfloor + \frac{k^2}{4} * \left\lfloor \frac{s}{\frac{k^2}{4}} \right\rfloor\right) \bmod \frac{k^3}{4}\right)$$

. Here, $k$ is the radix of the switches. To maintain equal number of communication hops between all host communications, at each stage, for every source host, $i$, the three parts of the equation are executed and subsequently aggregated to calculate the destination host $j$. The first part of the equation, ($i + s \bmod \frac{k}{2}$), may define a cyclic sequence of communication between the plurality of hosts, ensuring that each host communicates with every other host. The second part of the equation,

$$\left(\left(\frac{k}{2} * \left\lfloor \frac{i}{\frac{k}{2}} \right\rfloor + \frac{k}{2} * \left\lfloor \frac{s}{\frac{k}{2}} \right\rfloor\right) \bmod \frac{k^2}{4}\right)$$

, may define a destination switch within a particular destination POD associated with the destination host. In other words, the second part of the equation may identify which switch within a given POD should be the destination for a particular communication process. In this regard, the second part of the equation may calculate a value that represents a switch offset, or relative position of the switch within a POD. Such a value may indicate which specific switch inside the POD should handle the data transmission for that communication instance. The third part of the equation,

$$\left(\left(\frac{k^2}{4} * \left\lfloor \frac{i}{\frac{k^2}{4}} \right\rfloor + \frac{k^2}{4} * \left\lfloor \frac{s}{\frac{k^2}{4}} \right\rfloor\right) \bmod \frac{k^3}{4}\right)$$

, may define a destination POD associated with the destination host. In this regard, the third part of the equation may calculate a value that represents a POD offset, or relative position of a destination host $j$ within the hierarchy of PODs. Such a value may indicate which POD in the network's hierarchy should be the target for the communication. In other words, the third part of the equation may select the appropriate POD for the destination host for each communication stage. At each stage, for every source host, the three parts of the equation are executed and subsequently aggregated to determine the destination host. Such a structured approach assures that the number of hops from a source host to a destination host is consistent for all host interactions. In other words, at each stage, data communication from each source host to its corresponding destination host has equal number of communication hops. This is accomplished by methodically creating offsets at different layers of the network structure, ensuring balanced load and communication efficiency.

In various embodiments of the disclosure, the disclosed equations are designed to encompass the upper limits Fat Tree network topologies. These embodiments specifically consider Fat Tree configurations with switches characterized by a radix, $k$, within each POD. The PODs in these embodiments are structured to include both leaf and spine layers. In such configurations, a single POD can accommodate up to $\frac{k^2}{4}$ hosts, with the total capacity of the network structure being capable of supporting a maximum of $\frac{k^3}{4}$ hosts. In instances where the network configuration does not fully utilize this maximum capacity, the proposed equations within this invention can be modified. Such modifications are intended to adapt the equations to suit the specific requirements of these non-maximum configurations, thereby ensuring the achievement of structured communication patterns that are equivalent in efficiency and organization to those observed in maximum configurations.

As shown in block 1210, embodiments of the method may include executing the data distribution task by transmitting respective portions of the plurality of data portions from each source host to the at least one identified destination host via the corresponding subset of the plurality of switches, wherein the transmission facilitates processing of the AI workload across the plurality of hosts. As described herein, the data distribution task may be executed by transmitting the data portions according to an all-to-all communication pattern where every host in the network transmitting data portions to every other host in a series of stages. At each stage, data may be transmitted simultaneously from multiple source hosts to corresponding destination hosts, ensuring comprehensive data exchange across the network. This communication pattern may be particularly relevant for tasks requiring distributed processing, such as AI workloads, where intermediate results generated by one host must be shared with other hosts to continue processing. The all-to-all pattern may be implemented by dividing the communication process into multiple stages, with the source and destination hosts for each stage determined based on specific equations or algorithms designed to optimize resource utilization and minimize latency.

In some embodiments, the method may transmit the plurality of data portions in a sequence of data distribution stages based on the required number of data distribution stages. For each stage, upon identifying a destination host (j), the method may transmit the designated data portion from the source host (i) through an optimized path of switches, as determined by the equation described herein. In doing so, the method may optimize network performance by ensuring that at each stage, simultaneous data transmission from each source host to a corresponding destination host traverses an equal number of intermediary nodes (e.g., switches), or communication hops, regardless of their source and destination within the network.

In some embodiments, at each data distribution stage ($s$), each source host may transmit respective data portions to a corresponding destination host simultaneously. The number of destination hosts for each source host ($i$) may be determined based on a window size, $W$. For instance, for a window size $W=1$, at each stage a particular source host may communicate with exactly one destination host. However, there may be instances in which, during a stage, a source host may need to transmit data to two or more distinct destination hosts simultaneously. To manage these multiple destinations, for window size $W>1$, embodiments of the method may execute the data distribution task in a clustered grouping of data distribution stages, where the size of the clustered grouping is based on at least the window size, $W$. Here, the groups may be selected for clustering based on at least the number of communication hops required for traversal of data from each source host to the at least one identified destination host.

To execute the data distribution task in the sequence of data distribution stages, the method may iteratively determine the destination host ($j$) for each source host ($i$) at each data distribution stage ($s$) for the required number of data distribution stages. At each iteration, the method may transmit data portions from the plurality of data portions from the source host ($i$) to the determined destination host ($j$).

As described herein, the hosts may be evenly and symmetrically distributed across the available PODs. For instance, if there is a total of 4 PODs (e.g., P1, P2, P3, P4) as shown in FIG. 1, and a total of 16 hosts, each of the 4 PODs will have an equal number of distribution of hosts, with each POD facilitating connections to 4 distinct hosts. In some embodiments, the hosts may not be symmetrically distributed across the available PODs. In such cases, the method may integrate virtual hosts in the network structure to balance the asymmetric distribution hosts under each POD to create a symmetric distribution. In response, the method may execute the data distribution task as detailed herein. During transfer of data portions, if a virtual host is designated as a destination host, no actual data will be sent to the virtual host.

FIG. 12 thus illustrates flowcharts describing the operation of apparatuses, methods, and computer program products according to example embodiments contemplated herein. It will be understood that each flowchart block, and combinations of flowchart blocks, may be implemented by various means, such as hardware, firmware, processor, circuitry, and/or other devices associated with execution of software including one or more computer program instructions. For example, one or more of the operations described above may be implemented by an apparatus executing computer program instructions. In this regard, as described in connection with FIG. 7 above, the computer program instructions may be stored by a memory 714 of the system 110 and executed by a processor 712 of the system 110. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture, the execution of which implements the functions specified in the flowchart blocks. The computer program instructions may also be loaded onto a computer or other programmable apparatus to cause a series of operations to be performed on the computer or other programmable apparatus to produce a computer-implemented process such that the instructions executed on the computer or other programmable apparatus provide operations for implementing the functions specified in the flowchart blocks.

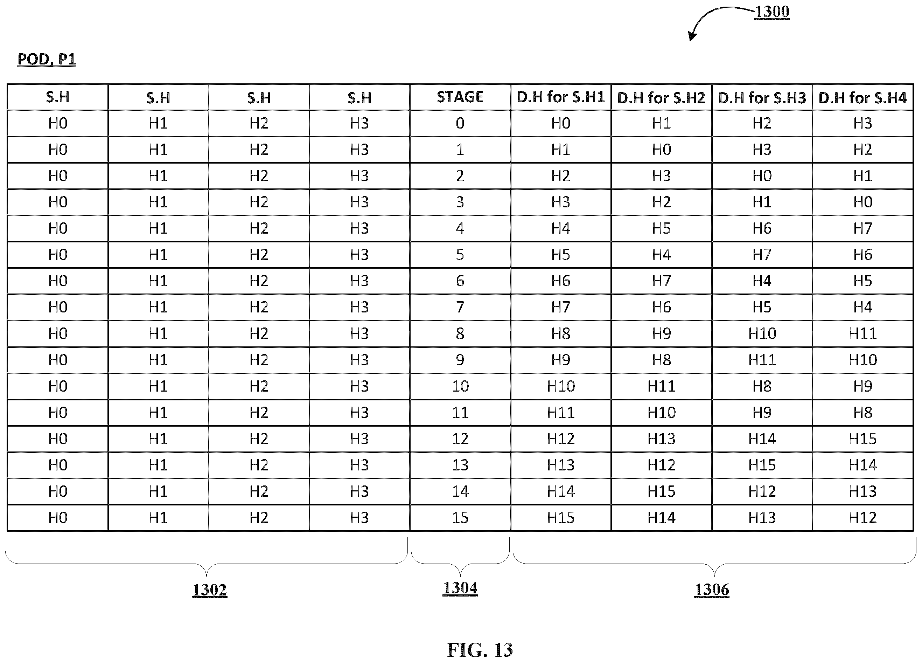

FIG. 13 illustrates an example equation outcome table 1300 for optimized data communication associated with POD P1 of FIG. 6, in accordance with an embodiment of the invention. As shown in FIG. 13, the example equation outcome table 1300 may be presented as a structured data representation comprising nine columns. Each of the first four columns 1302 may represent a source host ($i$) (e.g., H0, H1, H2, or H3) in P1. The fifth column 1304 may represent the stages ($s$) of iterative progression of the equation used to determine the destination host ($j$). The last four columns 1306 may represent destination hosts ($j$) for corresponding source hosts ($i$) represented in the first four columns 1302. For example, the sixth column may represent destination hosts for source host H0, the seventh column may represent destination hosts for source host H1, the eighth column may represent destination hosts for source host H2, and the ninth column may represent destination hosts for source host H3.

As described herein, for each data distribution stage (*s*), a destination host (*j*) may be identified for each source host (i) based on

$$j = \left(i + s \bmod \frac{k}{2}\right) + \left(\left(\frac{k}{2} * \left\lfloor \frac{i}{\frac{k}{2}} \right\rfloor + \frac{k}{2} * \left\lfloor \frac{s}{\frac{k}{2}} \right\rfloor\right) \bmod \frac{k^2}{4}\right) + \left(\left(\frac{k^2}{4} * \left\lfloor \frac{i}{\frac{k^2}{4}} \right\rfloor + \frac{k^2}{4} * \left\lfloor \frac{s}{\frac{k^2}{4}} \right\rfloor\right) \bmod \frac{k^3}{4}\right).$$

For the example network structure described in FIG. 6, *k*=4. To execute an all-to-all communication pattern in the example network structure described in FIG. 6, every host in the network should communicate with every other host. Such communication may include both intra-POD communication and inter-POD communication. At each stage, each source host may transmit respective data portions to a corresponding destination host simultaneously. As shown in FIG. 13, in the first iteration, e.g., at Stage 0, according to embodiments of the invention, source host H0 transmits data portions to corresponding destination host H0, source host H1 transmits data portions to corresponding destination host H4, source host H2 transmits data portions to corresponding destination host H8, and source host H3 transmits data portions to corresponding destination host H12 simultaneously. In the second iteration, e.g., at Stage 1, source host H0 transmits data portions to corresponding destination host H1, source host H1 transmits data portions to corresponding destination host H0, source host H2 transmits data portions to corresponding destination host H3, and source host H3 transmits data portions to corresponding destination host H2 simultaneously. In the third iteration, e.g., at Stage 2, source host H0 transmits data portions to corresponding destination host H2, source host H1 transmits data portions to corresponding destination host H3, source host H2 transmits data portions to corresponding destination host H0, and source host H3 transmits data portions to corresponding destination host H1 simultaneously. As shown in FIG. 13, at each stage, the number of communication hops for data transmission between each source host and a destination host is equal, ensuring balanced load and communication efficiency. For example, at Stage 1, the number of communication hops for data transmission between each source host and a corresponding destination host is 0, as the source and destination host are operatively coupled to the same leaf switch. For each of Stages 2 and 3, the number of communication hops for data transmission between each source host and a corresponding destination host is 1. For each stage in Stages 4-7, the number of communication hops for data transmission between each source host and a corresponding destination host is 5. For each stage in Stages 8-11, the number of communication hops for data transmission between each source host and a corresponding destination host is 5. Lastly, for each stage in Stages 12-15, the number of communication hops for data transmission between each source host and a corresponding destination host is 5.

Many modifications and other embodiments of the disclosure set forth herein will come to mind to one skilled in the art to which these embodiments pertain having the benefit of the teachings presented in the foregoing descriptions and the associated drawings. Although the figures only show certain components of the methods and systems described herein, it is understood that various other components may also be part of the disclosures herein. In addition, the method described above may include fewer steps in some cases, while in other cases the method may include additional steps. Modifications to the steps of the method described above, in some cases, may be performed in any order and in any combination.

Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:

Clause 1. A method for allocation of network resources, the method comprising:

receiving, from a user input device, a data distribution task and parameters associated with the data distribution task, wherein the data distribution task is associated with an artificial intelligence (AI) workload, wherein the parameters comprise a plurality of data portions and a plurality of hosts;

determining a plurality of points of delivery (PODs) based on the plurality of hosts, wherein the plurality of PODs comprises a plurality of switches, wherein each switch is associated with a radix (k);

operatively coupling the plurality of PODs to the plurality of hosts to configure a network structure optimized for executing the AI workload;

identifying, from the plurality of hosts, at least one destination host for each source host based on at least the radix (k); and

executing the data distribution task by transmitting respective portions of the plurality of data portions to from each source host to the at least one identified destination host via a corresponding subset of the plurality of PODs, wherein the transmission facilitates processing of the AI workload across the plurality of hosts.

Clause 2. The method of Clause 1, wherein executing the data distribution task comprises transmitting the plurality of data portions according to an all-to-all communication pattern.

Clause 3. The method of Clause 1, wherein configuring the network structure comprises arranging the plurality of PODs and the plurality of hosts in a mesh topology to facilitate data transmission.

Clause 4. The method of Clause 1, wherein executing the data distribution task comprises:

determining a required number of data distribution stages for execution of the data distribution task based on at least an aggregate count of the plurality of hosts; and

transmitting the plurality of data portions in a sequence of data distribution stages based on the required number of data distribution stages.

Clause 5. The method of Clause 4, wherein for each data distribution stage ($s$), the method comprises:

identifying a destination host ($j$) for each source host ($i$) based on at least a distribution of hosts ($H_x$) within each POD, and the radix ($k$) of each switch; and

transmitting a first data portion from the source host ($i$) to the identified destination host ($j$) via the corresponding subset of the plurality of PODs using a bandwidth, $B$, of corresponding communication links.

Clause 6. The method of Clause 5, wherein the destination host is identified based on:

$$ j = \left( \left( (i + s) \bmod H_x \right) * k \right) + \left\lfloor \frac{i}{H_x} \right\rfloor + \left\lfloor \frac{s}{H_x} \right\rfloor $$

Clause 7. The method of Clause 5, wherein, for each data distribution stage ($s$), a number of destination hosts for each source host ($i$) is determined based on a window size, $W$, and wherein the number of destination hosts for each source host ($i$) is equal to the window size, $W$.

Clause 8. The method of Clause 7, wherein for window size, $W>1$, executing the data distribution task comprises executing the data distribution task in a clustered grouping of data distribution stages, wherein a size of the clustered grouping is based on at least the window size, $W$.

Clause 9. The method of Clause 4, wherein executing the data distribution task in the sequence of data distribution stages further comprises:

iteratively determining the destination host ($j$) for each source host ($i$) at each data distribution stage ($s$) for the required number of data distribution stages; and

at each iteration, transmitting data portions from the plurality of data portions from the source host ($i$) to the determined destination host ($j$).

Clause 10. The method of Clause 1, wherein the method comprises:

determining that an allocation of the subset of the plurality of hosts under each POD is asymmetric;

integrating a plurality of virtual hosts in the network structure to balance the asymmetric distribution of the subset of the plurality of hosts under each POD to create a symmetric distribution; and

executing the data distribution task by transmitting respective portions of the plurality of data portions from each source host to the at least one identified destination host via the corresponding subset of PODs, wherein the at least one identified destination host comprises at least one of the plurality of hosts and the plurality of virtual hosts.

Clause 11. A system for allocation of network resources, the system comprising:

a processing device; and

a non-transitory storage device containing instructions that, when executed by the processing device, cause the processing device to:

receive, from a user input device, a data distribution task and parameters associated with the data distribution task, wherein the data distribution task is associated with an artificial intelligence (AI) workload, wherein the parameters comprise a plurality of data portions and a plurality of hosts;

determine a plurality of points of delivery (PODs) based on the plurality of hosts, wherein the plurality of PODs comprises a plurality of switches, wherein each switch is associated with a radix ($k$);

operatively couple the plurality of PODs to the plurality of hosts to configure a network structure optimized for executing the AI workload;

identify, from the plurality of hosts, at least one destination host for each source host based on at least the radix ($k$); and

execute the data distribution task by transmitting respective portions of the plurality of data portions to from each source host to the at least one identified destination host via a corresponding subset of the plurality of PODs, wherein the transmission facilitates processing of the AI workload across the plurality of hosts.

Clause 12. The system of Clause 11, wherein, in executing the data distribution task, the instructions, when executed, cause the processing device to transmit the plurality of data portions according to an all-to-all communication pattern.

Clause 13. The system of Clause 11, wherein, in configuring the network structure, the instructions, when executed, cause the processing device to arrange the plurality of PODs and the plurality of hosts in a mesh topology to facilitate data transmission.

Clause 14. The system of Clause 11, wherein, in executing the data distribution task, the instructions when executed, cause the processing device to:

determine a required number of data distribution stages for execution of the data distribution task based on at least an aggregate count of the plurality of hosts; and

transmit the plurality of data portions in a sequence of data distribution stages based on the required number of data distribution stages.

Clause 15. The system of Clause 14, wherein for each data distribution stage ($s$), the instructions, when executed, cause the processing device to:

identifying a destination host ($j$) for each source host ($i$) based on at least a distribution of hosts ($H_x$) within each POD, and the radix ($k$) of each switch; and

transmitting a first data portion from the source host ($i$) to the identified destination host ($j$) via the corresponding subset of the plurality of PODs using a bandwidth, $B$, of corresponding communication links.

Clause 16. The system of Clause 15, wherein the instructions, when executed, cause the processing device to identify the destination host based on:

$$j = \left( \left( (i+s) \bmod H_x \right) * k \right) + \left\lfloor \frac{i}{H_x} \right\rfloor + \left\lfloor \frac{s}{H_x} \right\rfloor$$

Clause 17. A computer program product for allocation of network resources, the computer program product comprising a non-transitory computer-readable medium comprising code configured to cause an apparatus to:

receive, from a user input device, a data distribution task and parameters associated with the data distribution task, wherein the data distribution task is associated with an artificial intelligence (AI) workload, wherein the parameters comprise a plurality of data portions and a plurality of hosts;

determine a plurality of points of delivery (PODs) based on the plurality of hosts, wherein the plurality of PODs comprises a plurality of switches, wherein each switch is associated with a radix ($k$);

operatively couple the plurality of PODs to the plurality of hosts to configure a network structure optimized for executing the AI workload;

identify, from the plurality of hosts, at least one destination host for each source host based on at least the radix ($k$); and

execute the data distribution task by transmitting respective portions of the plurality of data portions to from each source host to the at least one identified destination host via a corresponding subset of the plurality of PODs, wherein the transmission facilitates processing of the AI workload across the plurality of hosts.

Clause 18. The computer program product of Clause 17, wherein, in executing the data distribution task, the code is further configured to cause the apparatus to:
transmit the plurality of data portions according to an all-to-all communication pattern.
Clause 19. The computer program product of Clause 17, wherein, in configuring the network structure, the code is further configured to cause the apparatus to:
arrange the plurality of PODs and the plurality of hosts in a mesh topology to facilitate data transmission.
Clause 20. The computer program product of Clause 17, wherein, in executing the data distribution task, the code is further configured to cause the apparatus to:

determine a required number of data distribution stages for execution of the data distribution task based on at least an aggregate count of the plurality of hosts; and
transmit the plurality of data portions in a sequence of data distribution stages based on the required number of data distribution stages.

**Claims**

1. A method for allocation of network resources, the method comprising:

   receiving, from a user input device, a data distribution task and parameters associated with the data distribution task, wherein the data distribution task is associated with an artificial intelligence (AI) workload, wherein the parameters comprise a plurality of data portions and a plurality of hosts;
   determining a plurality of points of delivery (PODs) based on the plurality of hosts, wherein the plurality of PODs comprises a plurality of switches, wherein each switch is associated with a radix ($k$);
   operatively coupling the plurality of PODs to the plurality of hosts to configure a network structure optimized for executing the AI workload;
   identifying, from the plurality of hosts, at least one destination host for each source host based on at least the radix ($k$); and
   executing the data distribution task by transmitting respective portions of the plurality of data portions to from each source host to the at least one identified destination host via a corresponding subset of the plurality of PODs, wherein the transmission facilitates processing of the AI workload across the plurality of hosts.

2. The method of Claim 1, wherein executing the data distribution task comprises transmitting the plurality of data portions according to an all-to-all communication pattern.

3. The method of Claim 1 or 2, wherein configuring the network structure comprises arranging the plurality of PODs and the plurality of hosts in a mesh topology to facilitate data transmission.

4. The method of Claim 1, 2, or 3, wherein executing the data distribution task comprises:

   determining a required number of data distribution stages for execution of the data distribution task based on at least an aggregate count of the plurality of hosts; and
   transmitting the plurality of data portions in a sequence of data distribution stages based on the required number of data distribution stages, wherein for each data distribution stage ($s$), the method comprises:

   identifying a destination host ($j$) for each source host ($i$) based on at least a distribution of hosts ($H_x$) within each POD, and the radix ($k$) of each switch; and
   transmitting a first data portion from the source host ($i$) to the identified destination host ($j$) via the corresponding subset of the plurality of PODs using a bandwidth, $B$, of corresponding communication links.

5. The method of Claim 4, wherein the destination host is identified based on:

$$j = \left(\left((i + s) \bmod H_x\right) * k\right) + \left\lfloor \frac{i}{H_x} \right\rfloor + \left\lfloor \frac{s}{H_x} \right\rfloor$$

6. The method of Claim 4 or 5, wherein, for each data distribution stage ($s$), a number of destination hosts for each source host ($i$) is determined based on a window size, $W$, and wherein the number of destination hosts for each source host ($i$) is equal to the window size, $W$, wherein for window size, $W$>1, executing the data distribution task comprises executing the data distribution task in a clustered grouping of data distribution stages, wherein a size of the clustered grouping is based on at least the window size, *W*.

7. The method of Claim 4, 5, or 6, wherein executing the data distribution task in the sequence of data distribution stages further comprises:

   iteratively determining the destination host ($j$) for each source host ($i$) at each data distribution stage ($s$) for the required number of data distribution stages; and
   at each iteration, transmitting data portions from the plurality of data portions from the source host ($i$) to the determined destination host ($j$).

8. The method of any preceding Claim, wherein the method comprises:

   determining that an allocation of the subset of the plurality of hosts under each POD is asymmetric;
   integrating a plurality of virtual hosts in the network structure to balance the asymmetric distribution of the subset of the plurality of hosts under each POD to create a symmetric distribution; and
   executing the data distribution task by transmitting respective portions of the plurality of data portions from each source host to the at least one identified destination host via the corresponding subset of PODs, wherein the at least one identified destination host comprises at least one of the plurality of hosts and the plurality of virtual hosts.

9. A system for allocation of network resources, the system comprising:

   a processing device; and
   a non-transitory storage device containing instructions that, when executed by the processing device, cause the processing device to:

      receive, from a user input device, a data distribution task and parameters associated with the data distribution task, wherein the data distribution task is associated with an artificial intelligence (AI) workload, wherein the parameters comprise a plurality of data portions and a plurality of hosts;
      determine a plurality of points of delivery (PODs) based on the plurality of hosts, wherein the plurality of PODs comprises a plurality of switches, wherein each switch is associated with a radix ($k$);
      operatively couple the plurality of PODs to the plurality of hosts to configure a network structure optimized for executing the AI workload;
      identify, from the plurality of hosts, at least one destination host for each source host based on at least the radix ($k$); and
      execute the data distribution task by transmitting respective portions of the plurality of data portions to from each source host to the at least one identified destination host via a corresponding subset of the plurality of PODs, wherein the transmission facilitates processing of the AI workload across the plurality of hosts.

10. The system of Claim 9, wherein, in executing the data distribution task, the instructions, when executed, cause the processing device to transmit the plurality of data portions according to an all-to-all communication pattern.

11. The system of Claim 9 or 10, wherein, in configuring the network structure, the instructions, when executed, cause the processing device to arrange the plurality of PODs and the plurality of hosts in a mesh topology to facilitate data transmission.

12. The system of Claim 9, 10, or 11, wherein, in executing the data distribution task, the instructions when executed, cause the processing device to:

    determine a required number of data distribution stages for execution of the data distribution task based on at least an aggregate count of the plurality of hosts; and
    transmit the plurality of data portions in a sequence of data distribution stages based on the required number of data distribution stages, wherein for each data distribution stage (s), the instructions, when executed, cause the processing device to:

       identifying a destination host ($j$) for each source host ($i$) based on at least a distribution of hosts ($H_x$) within each POD, and the radix ($k$) of each switch; and
       transmitting a first data portion from the source host ($i$) to the identified destination host ($j$) via the corresponding subset of the plurality of PODs using a bandwidth, *B,* of corresponding communication links, wherein the instructions, when executed, cause the processing device to identify the destination host based on:

$$j = \left(\left((i + s)\, mod\ H_x\right) * k\right) + \left\lfloor \frac{i}{H_x} \right\rfloor + \left\lfloor \frac{s}{H_x} \right\rfloor$$

**13.** A computer program product for allocation of network resources, the computer program product comprising a non-transitory computer-readable medium comprising code configured to cause an apparatus to:

receive, from a user input device, a data distribution task and parameters associated with the data distribution task, wherein the data distribution task is associated with an artificial intelligence (AI) workload, wherein the parameters comprise a plurality of data portions and a plurality of hosts;

determine a plurality of points of delivery (PODs) based on the plurality of hosts, wherein the plurality of PODs comprises a plurality of switches, wherein each switch is associated with a radix (k);

operatively couple the plurality of PODs to the plurality of hosts to configure a network structure optimized for executing the AI workload;

identify, from the plurality of hosts, at least one destination host for each source host based on at least the radix (*k*); and

execute the data distribution task by transmitting respective portions of the plurality of data portions to from each source host to the at least one identified destination host via a corresponding subset of the plurality of PODs, wherein the transmission facilitates processing of the AI workload across the plurality of hosts.

**14.** The computer program product of Claim 13, wherein, in configuring the network structure, the code is further configured to cause the apparatus to:

arrange the plurality of PODs and the plurality of hosts in a mesh topology to facilitate data transmission.

**15.** The computer program product of Claim 13 or 14, wherein, in executing the data distribution task, the code is further configured to cause the apparatus to:

determine a required number of data distribution stages for execution of the data distribution task based on at least an aggregate count of the plurality of hosts; and

transmit the plurality of data portions in a sequence of data distribution stages based on the required number of data distribution stages.

FIG. 1

**FIG. 2**

**FIG. 3A**

**FIG. 3B**

EP 4 592 844 A1

FIG. 4

**FIG. 5A**

**FIG. 5B**

FIG. 6

EP 4 592 844 A1

110

```
                    ┌─────────────────┐
                    │     MEMORY      │
                    │      714        │
                    └─────────────────┘
                             ▲
                             │
                             ▼
┌─────────────────┐   ┌─────────────────┐   ┌─────────────────┐
│    RESOURCE     │   │                 │   │  INPUT/OUTPUT   │
│   ALLOCATION    │◄─►│   PROCESSOR     │◄─►│   CIRCUITRY     │
│    CIRCUITRY    │   │      712        │   │      716        │
│      720        │   │                 │   │                 │
└─────────────────┘   └─────────────────┘   └─────────────────┘
                             ▲
                             │
                             ▼
                    ┌─────────────────┐
                    │  COMMUNICATIONS │
                    │    CIRCUITRY    │
                    │      718        │
                    └─────────────────┘
```

**FIG. 7**

HARWARE STRUCTURE(S) 815

DATA STORAGE 801

DATA STORAGE 805

ACTIVATION STORAGE 820

ARITHMETIC LOGIC UNIT(S) 810

**FIG. 8A**

HARWARE STRUCTURE(S) 815

DATA STORAGE 801

DATA STORAGE 805

COMPUTATIONAL HARWARE 802

COMPUTATIONAL HARWARE 806

ACTIVATION STORAGE 820

**FIG. 8B**

900

MODEL TRAINING
ENGINE
906

DATA INGESTION
ENGINE
902

DATA PRE-
PROCESSING
ENGINE
904

OPTIMIZATION
MODULE
908

FIG. 9

1000

| RECEIVING, FROM A USER INPUT DEVICE, A DATA DISTRIBUTION TASK AND PARAMETERS ASSOCIATED WITH THE DATA DISTRIBUTION TASK, WHEREIN THE DATA DISTRIBUTION TASK IS ASSOCIATED WITH AN ARTIFICIAL INTELLIGENCE (AI) WORKLOAD, WHEREIN THE PARAMETERS COMPRISE A PLURALITY OF DATA PORTIONS AND A PLURALITY OF HOSTS
1002 |

↓

DETERMINING A PLURALITY OF POINTS OF DELIVERY (PODS) BASED ON THE PLURALITY OF HOSTS, WHEREIN THE PLURALITY OF PODS COMPRISES A PLURALITY OF SWITCHES, WHEREIN EACH SWITCH IS ASSOCIATED WITH A RADIX
($k$)
1004

↓

OPERATIVELY COUPLING THE PLURALITY OF PODS TO THE PLURALITY OF HOSTS TO CONFIGURE A NETWORK STRUCTURE OPTIMIZED FOR EXECUTING THE AI WORKLOAD
1006

↓

IDENTIFYING AT LEAST ONE DESTINATION HOST FOR EACH SOURCE HOST BASED ON AT LEAST THE RADIX ($K$)
1008

↓

EXECUTING THE DATA DISTRIBUTION TASK BY TRANSMITTING RESPECTIVE PORTIONS OF THE PLURALITY OF DATA PORTIONS TO FROM EACH SOURCE HOST TO THE AT LEAST ONE IDENTIFIED DESTINATION HOST VIA A CORRESPONDING SUBSET OF THE PLURALITY OF PODS, WHEREIN THE TRANSMISSION FACILITATES PROCESSING OF THE AI WORKLOAD ACROSS THE PLURALITY OF HOSTS
1010

**FIG. 10**

## POD, P1

| S.H | S.H | S.H | S.H | STAGE | D.H for S.H1 | D.H for S.H2 | D.H for S.H3 | D.H for S.H4 |
|-----|-----|-----|-----|-------|--------------|--------------|--------------|--------------|
| H0 | H1 | H2 | H3 | 0 | H0 | H4 | H8 | H12 |
| H0 | H1 | H2 | H3 | 1 | H4 | H8 | H12 | H0 |
| H0 | H1 | H2 | H3 | 2 | H8 | H12 | H0 | H4 |
| H0 | H1 | H2 | H3 | 3 | H12 | H0 | H4 | H8 |
| H0 | H1 | H2 | H3 | 4 | H1 | H5 | H9 | H13 |
| H0 | H1 | H2 | H3 | 5 | H5 | H9 | H13 | H1 |
| H0 | H1 | H2 | H3 | 6 | H9 | H13 | H1 | H5 |
| H0 | H1 | H2 | H3 | 7 | H13 | H1 | H5 | H9 |
| H0 | H1 | H2 | H3 | 8 | H2 | H6 | H10 | H14 |
| H0 | H1 | H2 | H3 | 9 | H6 | H10 | H14 | H2 |
| H0 | H1 | H2 | H3 | 10 | H10 | H14 | H2 | H6 |
| H0 | H1 | H2 | H3 | 11 | H14 | H2 | H6 | H10 |
| H0 | H1 | H2 | H3 | 12 | H3 | H7 | H11 | H15 |
| H0 | H1 | H2 | H3 | 13 | H7 | H11 | H15 | H3 |
| H0 | H1 | H2 | H3 | 14 | H11 | H15 | H3 | H7 |
| H0 | H1 | H2 | H3 | 15 | H15 | H3 | H7 | H11 |

1102　　　　1104　　　　1106

**FIG. 11**

EP 4 592 844 A1

1200

RECEIVING, FROM A USER INPUT DEVICE, , A DATA DISTRIBUTION TASK AND PARAMETERS ASSOCIATED WITH THE DATA DISTRIBUTION TASK, WHEREIN THE DATA DISTRIBUTION TASK IS ASSOCIATED WITH AN ARTIFICIAL INTELLIGENCE (AI) WORKLOAD, WHEREIN THE PARAMETERS COMPRISE A PLURALITY OF DATA PORTIONS AND A PLURALITY OF HOSTS
1202

DETERMINING A PLURALITY OF POINTS OF DELIVERY (PODS) BASED ON THE PLURALITY OF HOSTS
1204

OPERATIVELY COUPLING THE PLURALITY OF SWITCHES TO THE PLURALITY OF HOSTS TO CONFIGURE A NETWORK STRUCTURE OPTIMIZED FOR EXECUTING THE AI WORKLOAD
1206

IDENTIFYING AT LEAST ONE DESTINATION HOST FOR EACH SOURCE HOST BASED ON AT LEAST A NUMBER OF COMMUNICATION HOPS REQUIRED FOR TRAVERSAL OF DATA FROM EACH SOURCE HOST TO THE AT LEAST ONE DESTINATION HOST VIA A CORRESPONDING SUBSET OF THE PLURALITY OF SWITCHES
1208

EXECUTING THE DATA DISTRIBUTION TASK BY TRANSMITTING RESPECTIVE PORTIONS OF THE PLURALITY OF DATA PORTIONS FROM EACH SOURCE HOST TO THE AT LEAST ONE IDENTIFIED DESTINATION HOST VIA THE CORRESPONDING SUBSET OF THE PLURALITY OF SWITCHES, WHEREIN THE TRANSMISSION FACILITATES PROCESSING OF THE AI WORKLOAD ACROSS THE PLURALITY OF HOSTS
1210

FIG. 12

**POD, P1**

1300

| S.H | S.H | S.H | S.H | STAGE | D.H for S.H1 | D.H for S.H2 | D.H for S.H3 | D.H for S.H4 |
|---|---|---|---|---|---|---|---|---|
| H0 | H1 | H2 | H3 | 0 | H0 | H1 | H2 | H3 |
| H0 | H1 | H2 | H3 | 1 | H1 | H0 | H3 | H2 |
| H0 | H1 | H2 | H3 | 2 | H2 | H3 | H0 | H1 |
| H0 | H1 | H2 | H3 | 3 | H3 | H2 | H1 | H0 |
| H0 | H1 | H2 | H3 | 4 | H4 | H5 | H6 | H7 |
| H0 | H1 | H2 | H3 | 5 | H5 | H4 | H7 | H6 |
| H0 | H1 | H2 | H3 | 6 | H6 | H7 | H4 | H5 |
| H0 | H1 | H2 | H3 | 7 | H7 | H6 | H5 | H4 |
| H0 | H1 | H2 | H3 | 8 | H8 | H9 | H10 | H11 |
| H0 | H1 | H2 | H3 | 9 | H9 | H8 | H11 | H10 |
| H0 | H1 | H2 | H3 | 10 | H10 | H11 | H8 | H9 |
| H0 | H1 | H2 | H3 | 11 | H11 | H10 | H9 | H8 |
| H0 | H1 | H2 | H3 | 12 | H12 | H13 | H14 | H15 |
| H0 | H1 | H2 | H3 | 13 | H13 | H12 | H15 | H14 |
| H0 | H1 | H2 | H3 | 14 | H14 | H15 | H12 | H13 |
| H0 | H1 | H2 | H3 | 15 | H15 | H14 | H13 | H12 |

1302     1304     1306

**FIG. 13**

## EUROPEAN SEARCH REPORT

**Application Number**

EP 25 15 3849

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOGDAN PRISACARI ET AL: "Generalized Hierarchical All-to-All Exchange Patterns", PARALLEL&DISTRIBUTED PROCESSING (IPDPS), 2013 IEEE 27TH INTERNATIONAL SYMPOSIUM ON, IEEE, 20 May 2013 (2013-05-20), pages 537-547, XP032444473, DOI: 10.1109/IPDPS.2013.87 ISBN: 978-1-4673-6066-1 | 1-4,6-15 | INV. G06F9/50 |
| A | * figures 3,4,5; table II * <br> * Section B, Section III; page 539 * <br> * page 541 * <br> * section B; page 544 * | 5 | |

----- 

**TECHNICAL FIELDS SEARCHED (IPC)**

G06N
G06F

The present search report has been drawn up for all claims

| Place of search | Date of completion of the search | Examiner |
|---|---|---|
| The Hague | 20 May 2025 | Dieben, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GR 20240100894
- US 42704624
- GR 20240100049
- US 42726924
- GR 20240100053
- US 427046
- US 427269